(19) Europäisches Patentamt
European Patent Office
Office européen des brevets

(11) Veröffentlichungsnummer: **0 047 716**
**B1**

(12) # EUROPÄISCHE PATENTSCHRIFT

(45) Veröffentlichungstag der Patentschrift: **11.07.84**

(51) Int. Cl.³: **C 11 D 3/395,** D 06 L 3/00, A 01 N 43/90, C 09 B 47/04

(21) Anmeldenummer: **81810361.6**

(22) Anmeldetag: **03.09.81**

(54) **Verfahren zum Bleichen von Textilien und zum Bekämpfen von Mikroorganismen.**

(30) Priorität: **09.09.80 CH 6764/80**
**09.09.80 CH 6765/80**

(43) Veröffentlichungstag der Anmeldung: **17.03.82 Patentblatt 82/11**

(45) Bekanntmachung des Hinweises auf die Patenterteilung: **11.07.84 Patentblatt 84/28**

(84) Benannte Vertragsstaaten: **AT BE CH DE FR IT LI LU NL SE**

(56) Entgegenhaltungen:
**EP - A - 0 026 744**
**DE - A - 2 812 261**
**DE - A - 2 813 198**
**FR - A - 2 384 882**
**US - A - 2 647 126**

(73) Patentinhaber: **CIBA-GEIGY AG, Postfach, CH-4002 Basel (CH)**

(72) Erfinder: **Hölzle, Gerd, Dr., Spitzacker 9, CH-4410 Liestal (CH)**
Erfinder: **Reinert, Gerhard, Dr., Weiherweg 1/7, CH-4123 Allschwil (CH)**
Erfinder: **Polony, Rudolf, Dr., Riehenstrasse 167, CH-4058 Basel (CH)**

**EP 0 047 716 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zum Bleichen von bzw. Fleckenentfernen aus Textilien sowie zum Bekämpfen von Mikroorganismen in oder auf organischen oder anorganischen Substraten bzw. zum Schützen derselben vor dem Befall durch Mikroorganismen, ferner Bleich-, Wasch-, Einweichmittel und antimikrobiell wirksame Mittel zur Durchführung des Verfahrens sowie neue sulfonierte Zink- und Aluminiumphthalocyaninverbindungen.

Es sind bereits Verfahren zum Bleichen von Textilien mit photosensibilisierenden Verbindungen, z.B. mit wasserlöslichen, insbesondere sulfonierten Phthalocyaninderivaten und entsprechende Waschmittel bekannt. Siehe dazu US-A Nrn. 3927967, 4033718 und 4094806, DE-A Nrn. 2222829 und 2627449, EP-Anmeldungen Nrn. 3149, 3371 und 3861. Ein Verfahren zum Bleichen von Textilien mit Hilfe von wasserlöslichen Aluminiumphthalocyaninverbindungen, z.B. mit Hilfe von sulfonierten Aluminiumphthalocyaninverbindungen sowie entsprechende Wachsmittel sind aus der FR-A Nr. 2384882 bekannt.

Ausserdem ist ein Verfahren zur Bekämpfung von Mikroorganismen auf verschiedenen Substraten mit Hilfe von wasserlöslichen Phthalocyaninverbindungen, z.B. Aluminiumphthalocyaninverbindungen, besonders von sulfoniertem Aluminiumphthalocyanin, und ein diese Wirkstoffe enthaltendes Mittel aus der DE-A Nr. 2812261 bekannt.

Die erste Aufgabe der vorliegenden Erfindung bestand nun darin, ein Verfahren zum Bleichen von Textilien und entsprechende Bleich- und Waschmittel zur Durchführung dieses Verfahrens zu finden, die noch wirksamer, wirtschaftlicher und günstiger sind als die vorstehend beschriebenen. Es wurde dabei überraschenderweise gefunden, dass der Einsatz von sulfonierten Zink- und Aluminiumphthalocyaninen, die zusätzlich noch mit neutralen, nicht wasserlöslichmachenden Gruppen substituiert sind, als Photoaktivatoren die Effizienz der bekannten Verfahren derart verbessert, dass damit die gestellte Aufgabe gelöst werden konnte.

Die zweite Aufgabe der vorliegenden Erfindung war es, ein Verfahren zum Bekämpfen von Mikroorganismen auf verschiedenen Substraten und entsprechende Mittel zur Durchführung dieses Verfahrens zu finden, die noch wirksamer, wirtschaftlicher und günstiger sind als die aus der DE-A Nr. 2812261 bekannten. Es wurde dabei überraschenderweise gefunden, dass der Einsatz von sulfonierten Zink- und Aluminiumphthalocyaninen, die zusätzlich noch mit neutralen, nicht wasserlöslichmachenden Gruppen substituiert sind, die Effizienz des bekannten Verfahrens derart verbessert, dass damit die gestellte Aufgabe gelöst werden konnte.

Das erfindungsgemässe Verfahren zum Bleichen von bzw. Fleckenentfernen aus Textilien und zum Bekämpfen von Mikroorganismen in oder auf organischen oder anorganischen Substraten bzw. zum Schützen derselben vor dem Befall durch Mikroorganismen durch Behandeln der Textilien bzw. der von Mikroorganismen zu befreienden oder zu schützenden Substrate mit wasserlöslichen Zink- oder Aluminiumphthalocyaninen in Gegenwart von Wasser und unter Bestrahlung mit Licht ist dadurch gekennzeichnet, dass man als wasserlösliche Zink- oder Aluminiumphthalocyanine, die zusätzlich mit neutralen, nicht wasserlöslichmachenden Gruppen, z.B. mit Halogenatomen oder Pseudohalogenen substituiert sind, oder Mischungen von solchen Phthalocyaninverbindungen, einsetzt.

In einem ersten Teilaspekt betrifft also die vorliegende Erfindung ein Verfahren zum Bleichen von bzw. Fleckenentfernen aus Textilien, das dadurch gekennzeichnet ist, dass man diese in Gegenwart von Wasser und unter Bestrahlung mit Licht mit sulfonierten Zink- oder Aluminiumphthalocyaninen, die zusätzlich mit neutralen, nicht wasserlöslichmachenden Gruppen, z.B. mit Halogenatomen oder Pseudohalogenen substituiert sind, oder Mischungen von solchen Phthalocyaninverbindungen, behandelt.

Der zweite Teilaspekt betrifft ein Verfahren zum Bekämpfen von Mikroorganismen in oder auf organischen oder anorganischen Substraten bzw. zum Schützen derselben vor dem Befall durch Mikroorganismen, dadurch gekennzeichnet, dass man die genannten Substrate in Gegenwart von Wasser und unter Bestrahlung mit Licht mit sulfonierten Zink- oder Aluminiumphthalocyaninen, die zusätzlich mit neutralen, nicht wasserlöslichmachenden Gruppen, z.B. mit Halogenatomen oder Pseudohalogenen substituiert sind, oder Mischungen von solchen Phthalocyaninverbindungen, behandelt.

Im erfingungsgemässen Verfahren sind als sulfonierte Zink- oder Aluminiumphthalocyanine insbesondere solche der Formel:

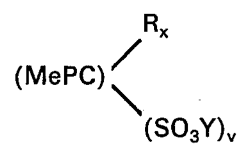

(1)

geeignet, worin MePC für das Zink- oder Aluminiumphthalocyaninringsystem steht, Y Wasserstoff, ein Alkalimetall-, Ammonium- oder Aminsalzion, v eine beliebige Zahl zwischen 1 und 4, R Fluor, Chlor, Brom, Jod oder Cyano und x eine beliebige Zahl zwischen 0,1 und 8 bedeuten, wobei die im Molekül vorhandenen R gleich oder verschieden sein können.

Besonders bevorzugt unter den Verbindungen der Formel 1 sind solche der Formel:

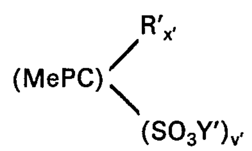

(2)

worin MePC für das Zink- oder Aluminiumphthalocyaninringsystem steht, Y′ Wasserstoff, ein Alkalimetall- oder Ammoniumion, v′ eine beliebige Zahl zwischen 1,3 und 4, R′ Chlor oder Brom und

x' eine beliebige Zahl zwischen 0,5 und 8 bedeuten.

In Formel 2 ist v' vorzugsweise eine beliebige Zahl zwischen 2 und 4, insbesondere zwischen 3 und 4 und x' vorzugsweise eine beliebige Zahl zwischen 0,8 und 4. Wie in der Phthalocyaninchemie üblich, bestehen die einzelnen Produkte häufig aus Mischungen, da bei der Herstellung (z.B. Sulfonierung, Halogenierung usw.) keine einheitlichen Produkte entstehen.

Im Rahmen der Formel 2 sind besonders jene im erfindungsgemässen Verfahren einsetzbaren Verbindungen zu erwähnen, worin Y' Wasserstoff, Natrium oder Kalium, v' eine beliebige Zahl zwischen 2 und 4, insbesondere zwischen 3 und 4, R' Chlor oder Brom, vorzugsweise Chlor und x' eine beliebige Zahl zwischen 0,8 und 2 bedeuten, z.B. solche, in denen Y' Wasserstoff, Natrium oder Kalium, v' eine beliebige Zahl zwischen 3 und 4, R' Brom und x' eine beliebige Zahl zwischen 0,5 und 1,5 bedeuten.

Besonders bevorzugt werden im erfindungsgemässen Verfahren die genannten Aluminiumphthalocyaninverbindungen eingesetzt, insbesondere solche der Formel:

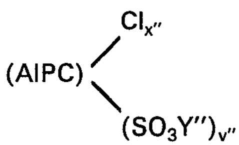 (3)

worin AlPC für das Aluminiumphthalocyaninringsystem steht, x'' eine beliebige Zahl zwischen 0,8 und 1,5, v'' eine beliebige Zahl zwischen 3 und 4 und Y'' Wasserstoff oder Natrium bedeuten.

Die Verbindungen der Formels 1 und 2 sowie die daraus abgeleiteten bevorzugten Verbindungen sind neu und ebenfalls Gegenstand der vorliegenden Erfindung.

Wie aus der Phthalocyaninchemie bekannt, ist im Aluminiumphthalocyaninringsystem die dritte Valenz des Aluminiums durch einen zusätzlichen Liganden, z.B. ein Anion, abgesättigt. Dieses Anion kann mit dem Anion der Aluminiumverbindung identisch sein, die zur Herstellung des Komplexes benutz wurde. Es ist für die Wirksamkeit der jeweiligen Verbindung nicht von Beteudung. Beispiele für solche Anionen sind Halogenid-, Sulfat-, Nitrat-, Acetat- oder Hydroxylionen.

Unter Aminsalzion Y ist ein substituiertes Ammoniumion, z.B. ein solches der Formel:

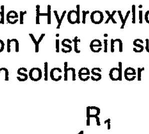

zu verstehen, worin $R_1$, $R_2$ und $R_3$ unabhängig voneinander Wasserstoff oder gegebenenfalls mit Halogen, Hydroxy, Phenyl oder Cyano substituiertes Alkyl (vorzugsweise mit 1 bis 4 C-Atomen) bedeutet, wobei mindestens ein R-Substituent von Wasserstoff verschieden ist. Zwei R-Reste zusammen können auch die Ergänzung zu einem gesättigten 5- oder 6gliedrigen Stickstoffheterocyclus bilden, der gegebenenfalls noch zusätzlich ein Sauerstoff- oder Stickstoffatom als Ringglied enthält. Beispiele für solche Heterocyclen sind: Piperidin, Piperazin, Morpholin, Pyrrolidin, Imidazolidin usw.

Der Index v zeigt den Sulfonierungsgrad an, der selbstverständlich nicht ganzzahlig sein muss. Bevorzugte Sulfonierungsgrade liegen zwischen 1,3 und 4, insbesondere zwischen 2 und 4. Die Zahl der im Molekül benötigten Sulfogruppen hängt auch von der Zahl der vorhandenen Substituenten R ab. Es müssen in jedem Fall so viele Sulfogruppen vorhanden sein, dass eine ausreichende Wasserlöslichkeit gewährleistet ist. Es kann bereits eine Mindestlöslichkeit von 0,01 g/l ausreichend sein, im allgemeinen ist eine solche von 0,1 bis 20 g/l zweckmässig.

Das Erfindungsgemässe Bleich- und Fleckenentfernungsverfahren, d.h. die Behandlung der Textilien mit dem sulfonierten Zink- oder Aluminiumphthalocyanin, wird bevorzugt in neutralem oder alkalischem pH-Bereich ausgeführt.

Die sulfonierten Zink- oder Aluminiumphthalocyanine werden mit Vorteil in Mengen von 0,01 bis 100, insbesondere 0,01 bis 50 mg/l Behandlungsbad eingesetzt, wobei die eingesetzte Menge mit dem Sulfonierungsgrad und dem Substituenten R variieren kann.

Das Verfahren wird vorzugsweise als kombiniertes Wasch- und Bleichverfahren ausgeführt, in welchem Falle das wässerige Bad auch ein organisches Waschmittel, wie Seife oder synthetische Waschmittel (siehe unten), enthält, und gegebenenfalls auch andere Waschmittelzusätze, wie Schmutzsuspendiermittel, beispielsweise Natriumcarboxymethycellulose, und optische Aufhellungsmittel enthalten kann. Das sulfonierte Zink-oder Aluminiumphthalocyanin kann daher entweder bereits in das entsprechende Waschmittel eingearbeitet sein oder kann nachträglich zur Waschflotte zugesetzt werden. Das Verfahren kann allerdings auch als reines Bleichverfahren ohne Waschmittelzusätze ausgeführt werden. In diesem Falle ist es vorteilhaft, dass das Behandlungsbad einen Elektrolyt, z.B. Natriumchlorid, Natriumsulfat oder Natriumtripolyphosphat enthält, um das Aufziehen des Aluminiumphthalocyaninfarbstoffes zu gewährleisten. Die Mengen an Elektrolyt können etwa 0,5 bis 20 g/l betragen.

Das erfindungsgemässe Bleichverfahren wird zweckmässigerweise bei Temperaturen im Bereich von etwa 20 bis 100, insbesondere von 20 bis 85°C, während eines Zeitraumes von 15 min bis 5 h, vorzugsweise 15 bis 60 min, ausgeführt.

Für das erfindungsgemässe Bleichverfahren ist die Anwesenheit von Sauerstoff und die Bestrahlung mit Licht erforderlich. Als Sauerstoffquelle genügt der im Wasser gelöste bzw. in der Luft vorhandene Sauerstoff.

Die Bestrahlungen kann mit einer künstlichen Lichtquelle, die Licht z.B. im sichtbaren und/oder infraroten Bereich liefert (z.B. Glühlampe, Infrarotlampe, erfolgen, wobei das Bleich- bzw. Waschbad direkt bestrahlt werden kann, sei es durch eine Lichtquelle innerhalb des Behälters, in

dem sich die Flotte befindet (z.B. Lampe in der Waschmaschine), sei es durch eine Lichtquelle ausserhalb des Behälters. Ebenso kann die Bestrahlung aber auch erst nach der Entnahme der Textilien aus dem Behandlungsbad erfolgen. In diesem Falle sollen die Textilien jedoch noch feucht sein bzw. sie müssen nachträglich wieder befeuchtet werden. Als Lichtquelle kann aber auch besonders vorteilhaft Sonnenlicht dienen, wobei die Textilien entweder während einer Behandlung im Einweichbad, oder nach der Behandlung im Wasch- bzw. Bleichbad in feuchtem Zustand dem Sonnenlicht ausgesetzt werden.

Zur Entfaltung ihrer antimikrobiellen Aktivität benötigen die im erfindungsgemässen Verfahren einsetzbaren Zink- und Aluminiumphthalocyaninverbindungen die Gegenwart von Sauerstoff und Wasser sowie eine Bestrahlung durch Licht. Man arbeitet daher im allgemeinen in wässerigen Lösungen oder auf feuchten Substraten, als Sauerstoffquelle dient der im Wasser gelöste Sauerstoff oder der Luftsauerstoff. Die Anwesenheit von Reduktionsmitteln zerstört oder vermindert die Wirkung der Aktivsubstanzen.

Die Bestrahlung kann mit einer künstlichen Lichtquelle, die Licht beispielsweise im infraroten und/oder sichtbaren Bereich liefert, oder aber auch durch Sonnenlicht erfolgen. Gute Wirkung wird z.B. durch Licht im Bereich zwischen etwa 300 und 2500 nm erzielt. So kann beispielsweise mit einer handelsüblichen Glühlampe bestrahlt werden. Die Beleuchtungsintensität kann zwischen weiten Grenzen schwanken. Sie richtet sich nach der Konzentration an Wirkstoff, nach der Beschaffenheit des Substrates bzw. den zusätzlich vorhandenen Stoffen, durch die die Lichtausbeute beeinflusst wird. Als weiterer Parameter kann die Belichtungszeit variiert werden, d.h. bei geringerer Lichtintensität muss für die gleiche Wirkung länger belichtet werden als bei grösserer Intensität. Im allgemeinen sind, je nach Anwendungsgebiet, Belichtungszeiten von einigen Minuten bis zu einigen Stunden möglich.

Wird das Verfahren in einem wässerigen Bad durchgeführt (z.B. Entkeimung von Textilien), kann die Bestrahlung mit Licht entweder direkt im Behandlungsbad durch eine innerhalb oder ausserhalb desselben angebrachte künstliche Lichtquelle erfolgen oder die Substrate können nachträglich in feuchtem Zustande entweder ebenfalls mit einer künstlichen Lichtquelle beleuchtet oder dem Sonnenlicht ausgesetzt werden.

Bereits mit sehr geringen Konzentrationen an Wirksubstanz, z.B. mit 0,001 ppm, können gute antimikrobielle Effekte erzielt werden. Bevorzugt ist, je nach Anwendungsgebiet und je nach eingesetztem Phthalocyaninderivat, eine Konzentration zwischen 0,05 und 100, vorzugsweise 0,01 und 50 ppm. Da die Wirksubstanzen Farbstoffe sind, ist die obere Konzentrationsgrenze dadurch gegeben, dass bei deren Überschreitung eine unerwünschte Anfärbung der Substrate zu beobachten wäre. Die obere Konzentrationsgrenze ist also durch die Stärke der Eigenfarbe der eingesetzten Mittel begrenzt, kann aber 1000 ppm und mehr betragen.

Die im erfindungsgemässen Verfahren eingesetzten Zink- und Aluminiumphthalocyaninverbindungen weisen ein ausserordentlich breites Spektrum von Wirksamkeit gegen Mikroorganismen auf. So können durch das erfindungsgemässe Verfahren vor allem grampositive und gramnegative Bakterien bekämpft werden bzw. verschiedene Substrate vor dem Befall durch diese geschützt werden. Eine ausgezeichnet Wirkung wird auch gegen Pilze und Hefen beobachtet.

Im erfindungsgemässe Verfahren können zusätzlich wirkungssteigernde Substanzen zugesetzt werden, unter anderem Elektrolyte, z.B. anorganische Salze, etwa Natriumchlorid, Kaliumchlorid, Natriumsulfat, Kaliumsulfat, Natriumacetat, Ammoniumacetat. Alkalimetallphosphate, Alkalimetalltripolyphosphate, insbesondere Natriumchlorid und Natriumsulfat. Diese Salze können den erfindungsgemässen Mitteln oder direkt beim Applikationsverfahren zugesetzt werden, so dass sie in einer Konzentration von vorzugsweise 0,1 bis 10 % in der Applikationslösung vorhanden sind.

Aufgrund des erwähnten breiten Wirkungsspektrums gegen Mikroorganismen kann das erfindungsgemässe Verfahren bzw. die erfindungsgemässen Mittel in einer Reihe von Anwendungsgebieten eingesetzt werden, die nachstehend beispielweise angeführt sind.

Als wichtige Applikation sei die Entkeimung von Textilien synthetischer oder natürlicher Herkunft erwähnt. So kann Waschgut im Haushalt oder in der Industrie mit Hilfe des erfindungsgemässen Verfahrens desinfiziert werden. Das Waschgut kann dazu mit wässerigen Lösungen von wasserlöslichen Phthalocyaninderivaten unter Bestrahlung mit Licht in der oben erwähnten Weise behandelt werden. In der Behandlungsflotte kann der Phthalocyaninfarbstoff vorteilhaft in einer Konzentration von 0,01 bis 50 mg/l enthalten sein. Die Entkeimung kann mir Vorteil auch zusammen mit dem Waschvorgang durchgeführt werden. Zu diesem Zweck wird das Waschgut mit einer Waschflotte behandelt, die übliche Waschaktivsubstanzen, ein oder mehrere wasserlösliche Zink- oder Aluminiumphthalocyaninderivate und gegebenenfalls anorganische Salze und/oder weitere antimikrobiell wirksame Substanzen enthält. Der Waschvorgang kann dabei manuell, z.B. in einem Bottich oder auch in einer Waschmaschine durchgeführt werden. Die nötige Bestrahlung kann während des Waschvorganges durch geeignete Lichtquellen erfolgen oder das feuchte Waschgut kann auch nachträglich, z.B. während des Trocknens entweder mit einer geeigneten künstlichen Lichtquelle bestrahlt oder auch einfach dem Sonnenlicht ausgesetzt werden.

Die antimikrobiellen Wirkstoffe können der Desinfektions- bzw. Waschflotte direkt zugesetzt werden. Sie können aber auch in Seifen oder Waschpulver eingearbeitet werden, die bekannte Mischungen von Waschaktivsubstanzen, wie beispielsweise Seife in Form von Schnitzeln und Pulver, Synthetika, lösliche Salze von Sulfonsäurerhalbestern höhrerer Fettalkohole, höher und/oder mehrfach alkylsubstituierten Arylsulfonsäuren,

Sulfocarbonsäureester mittlerer bis höherer Alkohole, Fettsäureacylaminoalkyl- oder -aminoarylglycerinsulfonate, Phosphorsäureester von Fettalkoholen usw., Aufbaustoffe, sogenannte Builders, z.B. Alkalipoly- und -polymetaphosphate, Alkalipyrophosphate, Alkalisalze der Carboxymethycellulose und andere Soilredepositionsinhibitoren, ferner Alkalisilikate, Nitrilotriessigsäure, Äthylendiaminotetraessigsäure, Schaumstabilisatoren wie Alkanolamide höherer Fettsäuren sowie gegebenenfalls antistatische Mittel, rückfettende Hautschutzmittel wie Lanolin, Enzyme, Parfüme und Farbstoffe, optische Aufheller, weitere anorganische Salze und/oder weitere antimikrobielle Wirkstoffe enthalten.

Es muss darauf geachtet werden, dass die Waschflotten bzw. Waschmittel keine Reduktionsmittel enthalten, da sonst der für die antimikrobielle Wirksamkeit der Phthalocyanine notwendige Sauerstoff nicht zur Verfügung steht.

Das erfindungsgemässe Verfahren kann auch zur antimikrobiellen Ausrüstung von Textilien verwendet werden, da die Zink- und Aluminiumphthalocyaninderivate gut auf die Faser aufziehen und somit einen lang anhaltenden Effekt gewährleisten.

Ein weiteres Anwendungsgebiet des erfindungsgemässen Verfahrens und der erfindungsgemässen Mittel ist die Desinfektion von Spitalwäsche, medizinischen Gebrauchs- und Ausrüstungsgegenständen sowie von Böden, Wänden und Mobiliar (Oberflächendesinfektion) im allgemeinen sowie auch besonders in Spitälern. Die Desinfektion von Spitalwäsche kann in der für allgemeines Waschgut oben beschriebenen Weise erfolgen. Die übrigen Gegenstände sowie Boden- und Wandflächen können mit wässerigen Lösungen, die sulfonierte Zink- oder Aluminiumphthalocyaninverbindungen enthalten, behandelt werden und dabei oder nachträglich mit geeigneten Lichtquellen bestrahlt werden. Die Desinfektionslösungen können zusätzlich noch waschaktive Substanzen, andere antimikrobiell wirksame Verbindungen und/oder anorganische Salze enthalten. Zur Oberflächendesinfektion kann beispielsweise auf die betreffende Oberfläche eine wässerige Lösung der erfindungsgemässen Phthalocyaninverbindungen aufgebracht werden (z.B. durch Aufsprayen), welche Lösung vorzugsweise etwa 0,001 bis 50 ppm an Wirksubstanz enthält. Die Lösung kann auch noch andere übliche Zusätze enthalten, z.B. Netz-, Dispergier- oder Emulgiermittel, Waschaktivsubstanzen und gegebenenfalls anorganische Salze. Die Oberfläche wird nach dem Aufbringen der Lösung einfach dem Sonnenlicht ausgesetzt oder es kann bei Bedarf zusätzlich mit einer künstlichen Lichtquelle, z.B. einer Glühlampe, bestrahlt werden. Es empfiehlt sich, während der Bestrahlung die Oberfläche feucht zu halten.

Das erfindungsgemässe Verfahren bzw. die erfindungsgemässen Mittel können vorteilhaft auch zur Entkeimung bzw. Desinfektion von Schwimmbädern eingesetzt werden. Dem Wasser im Schwimmbad wird dazu zweckmässig eine oder mehrere der im erfindungsgemässen Verfahren einsetzbaren Phthalocyaninverbindungen, vorzugsweise in einer Menge zwischen 0,001 und 50, insbesondere zwischen 0,01 und 10 ppm, zugesetzt. Die Belichtung erfolgt einfach durch das Sonnenlicht. Gegebenenfalls kann eine zusätzliche Belichtung durch eingebaute Lampen vorgesehen werden. Durch das beschriebene Verfahren kann man das Wasser von Schwimmbecken frei von störenden Keimen halten und eine ausgezeichnete Wasserqualität aufrechterhalten.

Auch zur Entkeimung von Effluenten aus Kläranlagen kann das erfindungsgemässe Verfahren angewendet werden. Dazu setzt man dem Effluenten beispielsweise 0,001 bis 100, insbesondere 0,01 bis 10 ppm, eines oder mehrerer der im erfindungsgemässen Verfahren einsetzbaren Phthalocyaninverbindungen zu. Die Bestrahlung erfolgt zweckmässig durch das Sonnenlicht, gegebenenfalls kann zusätzlich mit künstlichen Lichtquellen bestrahlt werden.

Die vorerwähnten Anwendungsmöglichkeiten stellen nur eine beispielhafte Aufzählung für die sehr breite Anwendbarkeit des erfindungsgemässen Verfahrens dar.

Die vorliegende Erfindung betrifft auch Mittel zur Durchführung des erfindungsgemässen Verfahrens, insbesondere antimikrobiell wirksame Mittel sowie Bleich-, Wasch- und Einweichmittel. Diese Mittel sind dadurch gekennzeichnet, dass sie ein oder mehrere sulfonierte Zink- oder/und Aluminiumphthalocyanine enthalten, die zusätzlich mit neutralen, nicht wasserlöslichmachenden Gruppen substituiert sind. Bevorzugt enthalten diese Mittel Phthalocyaninverbindungen der Formeln 1 und 2 und die darunter fallenden besonders bevorzugten Verbindungen, z.B. solche der Formel 3. Die gennanten Mittel können zusätzlich, je nach Anwendungsart, auch übliche Formulierungsbestandteile enthalten.

Bevorzugte derartige Mittel enthalten ein oder mehrere vorstehend definierte Zink- oder/und Aluminiumphthalocyaninverbindungen, ein oder mehrere anorganische Salze, wie z.B. NaCl, NaBr, KBr, $K_2SO_4$, $Na_2SO_4$, $K_2CO_3$, $Na_2CO_3$, $NaHCO_3$ u.a., insbesondere NaCl oder/und $Na_2SO_4$ und gegebenenfalls Wasser. Beispielsweise besteht ein derartiges Mittel aus etwa 50 bis 80% einer Verbindung der Formel 1, insbesondere der Formel 2 bzw. 3, 10 bis 30% NaCl und/oder $Na_2SO_4$ beispielsweise 5 bis 15% NaC1 und 5 bis 15% $Na_2SO_4$ und 0 bis 30% Wasser. Diese Mittel können auch in wässeriger Lösung vorliegen, z.B. in Form einer 5 bis 50%igen, z.B. 5 bis 20%igen Lösung.

Erfindungsgemässe Waschmittel mit Bleichwirkung enthalten zusätzlich zum Zink- oder Aluminiumphthalocyaninwirkstoff, z.B. übliche Waschmittelbestandteile, beispielsweise ein oder mehrere organische Detergenzien, alkalische Gerüststoffsalze und gegebenenfalls weitere Bleichmittel, z.B. Perverbindungen wie etwa ein Perborat, Percarbonat usw.

Die erfindungsgemässen Waschmittel bzw. Einweichmittel enthalten z.B. die bekannten Mischungen von Waschaktivsubstanzen wie beispielsweise Seife in Form von Schnitzeln und Pulver, Synthetika, lösliche Salze von Sulfonsäurehalbestern höherer Fettalkohole, höher und/oder mehrfach alkylsubstituierter Arylsulfonsäuren Sulfocarbonsäureester mittlerer bis höherer Alkohole, Fettsäurecylaminoalkyl- oder -aminoarylglycerinsulfonate, Phosphorsäureester von Fettalkoholen usw. Als Aufbaustoffe, sogenannte Builders, kommen z.B. Alkalisalze der Carboxymethylcellulose und andere Soilredepositionsinhibitoren, ferner Alkylisikate, Alkalicarbonate, Alkaliborate, Alkaliperborate, Alkalipercarbonate, Nitrilotriessigsäure, Äthylendiaminotetraessigsäure, Schaumstabilisatoren wie Alkanolamide höherer Fettsäuren, in Betracht. Ferner können in den Waschmitteln beispielsweise enthalten sein: antistatische Mittel, rückfettende Hautschutzmittel wie Lanolin, Enzyme, Antimikrobika, Parfüme und optische Aufheller.

Die erfindungsgemässen Waschmittel bzw. Einweichmittel enthalten die sulfonierten Zink- oder/und Aluminiumphthalocyaninverbindungen vorzugsweise in einer Menge von 0,0005 bis 1,5, insbesondere 0,005 bis 1 Gew.-%, bezogen auf das Gesamtwasch- oder -einweichmittel.

Beispielsweise enthalten erfindungsgemässe Wasch- bzw. Einweichmittel mit Bleichwirkung 0,005 bis 1 Gew.-% der vorgenannten sulfonierten Zink- oder/und Aluminiumphthalocyaninverbindungen, 10 bis 20 Gew.-% einer anionischen, nichtionischen, semipolaren, ampholytischen oder/und zwitterionischen oberflächenaktiven Substanz, 0 bis 80 % eines alkalischen Gerüststoffsalzes und gegebenenfalls weitere übliche Waschmittelbestandteile, beispielsweise solche, die vorstehend erwähnt sind.

Als oberflächenaktive Substanzen in besagten Mitteln kommen beispielsweise auch wasserlösliche Alkylbenzolsulfonate, Alkylsulfate, äthoxylierte Alkyläthersulfate, Paraffinsulfonate, α-Olefinsulfonate, α-Sulfocarbonsäuren, deren Salze und Ester, Alkylglyceryläthersulfonate, Fettsäuremonoglyceridsulfate oder -sulfonate, Alkylphenolpolyäthoxyäthersulfate, 2-Acyloxyalkansulfonate, β-Alkyloxyalkansulfonate, Seifen, äthoxylierte Fettalkohole, Alkylphenole, Polypropoxyglykole, Polypropoxyäthylendiamine, Aminoxide, Phosphinoxide, Sulfoxide, aliphatische sekundäre und tertiäre Amine, aliphatische quaternäre Ammonium-, Phosponium- und Sulfoniumverbindungen oder Mischungen der gennanten Substanzen in Betracht.

Beispiele für alkalische Gerüststoffsalze, die etwa in einer Menge von 10 bis 60 Gew.-% in den erfindungsgemässen Mitteln vorhanden sein können, sind unter anderen: wasserlösliche Alkalimetallcarbonate, -borate, -phosphate, -polyphosphate, -bicarbonate und -silicate, wasserlösliche Aminopolycarboxylate, Phytate, Polyphosphonate und -carboxylate sowie wasserunlösliche Aluminiumsilicate.

Wie bereits erwähnt, enthalten die erfindungsgemässen antimikrobiellen Mittel ein oder mehrere sulfonierte Zink- oder/und Aluminiumphthalocyanine, die zusätzlich mit neutralen, nicht wasserlöslichmachenden Gruppen substituiert sind, insbesondere solche der Formel 1 und 2 und die darunter fallenden besonders bevorzugten Verbindungen, z.B. solche der Formel 3 sowie gegebenenfalls übliche Formulierungsbestandteile.

Bevorzugte derartige Mittel enthalten eine oder mehrere vorstehend definierte Aluminiumphthalocyaninverbindungen, ein oder mehrere anorganische Salze, wie z.B. NaCl, KCl, NaBr, KBr, $K_2SO_4$, $Na_2SO_4$, $K_2CO_3$, $NaHCO_3$ u.a., insbesondere NaCl oder/und $Na_2SO_4$ und gegebenenfalls Wasser. Beispielsweise besteht ein derartiges Mittel aus etwa 50 bis 80% einer Verbindung der Formel 1, insbesondere der Formel 2 bzw. 3, 1 bis 30% NaCl und/oder $Na_2SO_4$, beispielsweise 5 bis 15% NaCl und 5 bis 15% $Na_2CO_4$ und 0 bis 30% Wasser. Diese Mittel können auch in wässeriger Lösung vorliegen, z.B. in Form einer 5 bis 50%igen, z.B. 5 bis 20%igen Lösung.

Erfindungsgemässe Waschmittel mit antimikrobieller Wirkung enthalten zusätzlich zum Zink- oder/und Aluminiumphthalocyaninwirkstoff übliche Waschmittelbestandteile, beispielsweise ein oder mehrere organische Detergenzien und alkalische Gerüststoffsalze. Beispielsweise können die weiter oben angeführten Waschmittelbestandteile in den erfindungsgemässen Mitteln enthalten sein.

Die erfindungsgemässen antimikrobiell wirksamen Waschmittel enthalten die sulfonierten Zink- oder Aluminiumphthalocyaninverbindungen vorzugsweise in einer Menge von 0,0005 bis 2,5, insbesondere 0,005 bis 1 Gew.-%, bezogen auf das Gesamtwaschmittel.

Im übrigen können erfindungsgemässe Waschmittel mit antimikrobieller Wirkung in gleicher Weise zusammengesetzt sein wie weiter oben für die erfindungsgemässen Wasch- und Einweichmittel mit Bleichwirkung beschrieben.

Die im erfindungsgemässen Verfahren bzw. in den erfindungsgemässen Mitteln einsetzbaren sulfonierten Zink- und Aluminiumphthalocyaninverbindungen können nach in der Phthalocyaninchemie an sich bekannten Verfahren hergestellt werden. Beispielsweise können die nichtwasserlöslichmachenden Substituenten (z.B. Substituenten R in Formeln 1 und 2 bereits in den für den Aufbau des Phthalocyaninringgerüstes verwendeten Ausgangsmaterialien (z.B. Phthalsäureanhydrid, Phthalodinitril oder -imid) vorhanden sein. Nach erfolgtem Aufbau des nunmehr entsprechend substituierten, gegebenenfalls bereits metallisierten Phthalocyanins können die Sulfonsäuregruppen eingeführt werden, sofern diese nicht bereits auch in den Ausgangsmaterialien vorhanden waren. Manche Substituenten können auch in das bereits aufgebaute Phthalocyaninringsystem eingeführt werden, z.B. durch Chlorierung, Bromierung oder Jodierung (R = Cl, Br, J). Die Sulfonsäuregruppen können vorher (s. z.B. US-A Nr. 2647126) oder vorzugsweise nachher eingeführt werden. Sofern der Aufbau des Phthalocyaninringsystems aus Phthalodinitril in Gegenwart von Chloriden, z.B. $AlCl_3$ oder $ZnCl_2$, durchgeführt wird, enstehen bereits chlorierte Phthalocyanine, besonders mit einem Chlorgehalt von 0,5 bis 1,5 mol Chlor pro Mol Aluminiumphthalocyanin. In solche Produkte können die Sulfonsäuregruppen ebenfalls nachträglich eingeführt werden. Für die Herstellung von gemischt substituierten Phthalocyaninverbindungen können die erwähnten Methoden in geeigneter Weise kombiniert werden. Alle Verfahren sind in der Phthalocyaninchemie wohl bekannt und dort ausführlich beschrieben.

Die Einführung der Sulfonsäuregruppen kann beispielsweise durch Sulfonierung, etwa mit Hilfe von Oleum erfolgen. Alternativ können entsprechende unsulfonierte Phthalocyanine auch mit Chlorsulfonsäure zu den entsprechenden Phthalocyaninsulfochloriden umgesetzt und anschliessend zu den Sulfonsäuren hydrolysiert werden. In beiden Fällen können die freien Sulfonsäuregruppen nachträglich in ihre Salze übergeführt werden.

Alle Reaktionen am aufgebauten Phthalocyaninringsystem können bereits mit dem Zink- bzw. Aluminiumkomplex durchgeführt werden. Es ist aber auch möglich, die Substituenten in das metallfreie Phthalocyaningerüst einzuführen und dieses nachträglich nach üblichen Methoden zu metallisieren (s. z.B. FR-A Nr. 2384882), z.B. durch Umsetzung der metallfreien Phthalocyaninverbindungen mit einem Zink- oder Aluminiumsalz oder -alkoholat.

Zur Einführung von Halogenatomen kann auch mit Aminogruppen substituiertes Zink- oder Aluminiumphthalocyanin diazotiert und die Diazoniumgruppe (n) durch Halogen ersetzt werden (Sandmayr-Reaktion). Die Einführung der Sulfogruppen kann dabei ebenfalls vor oder nach Einführung der Halogenatome erfolgen.

Der Aufbau des Phthalocyaninringgerüstes aus Derivaten der Phthalsäure, wobei chlorierte Phthalocyanine entstehen, ist in "Ullmann's Encyclopädie der technischen Chemie", 4. Aufl., Bd. 18, S. 508 ff. und bei F.H. Moser, A.L. Thomas, "Phthalocyanine" (1963) S. 104 ff. beschrieben. Halogenierte bzw. sonstige inerte Substituenten tragende Phthalocyanine können durch Mischkondensation von unsubstituierten bzw. entsprechend substituierten Phthalsäuren bzw. Phthalsäurederivaten nach üblichen, in der Phthalocyaninchemie bekannten Verfahren erhalten werden. In den nachfolgenden Herstellungsvorschriften 1a, 2a, 3a und 5a wird gezeigt, wie solche Verfahren durchgeführt werden können.

In den Beispielen, die die Herstellung der Wirksubstanzen sowie das erfindungsgemässe Verfahren näher erläutern, stellen Teile- und Prozentangaben immer Gewichtsteile und Gewichtsprozente dar, sofern nichts anderes angeben ist. In allen Beispielen bedeutet AlPC das Aluminiumphthalocyaninringsystem und ZnPC das Zinkphthalocyaninringsystem. Ferner fallen die Phthalocyaninsulfonsäuren bei der Herstellung teilweise als Natriumsalze an. Wie in der Farbstoffchemie üblich, schliesst die Gruppe $-SO_3H$ daher auch ihre Natriumsalze ein. Die zur Charakterisierung der Phthalocyaninverbindungen verwendeten $\lambda_{max.}$-Werte aus dem Absorptionsspektrum wurden in einer Mischung aus Äthanol/Wasser 1:1 bei pH 7 bestimmt.

*Beispiel 1:*

a) In einem Autoklaven werden 128 g Phthalsäuredinitril, 40 g $AlCl_3$ und 650 g 1,2-Dichlorbenzol vorgelegt. Nach Spülung mit Stickstoff wird die Reaktionsmasse 26 h auf etwa 170°C erhitzt. Nach Abkühlen und Entlüften wird die Suspension unter Rühren in 400 ml Wasser, enthaltend 100 g Trinatriumphosphat, gegossen. Danach wird auf dem Rotationsverdampfer zur Trockne eingedampft, das Rohprodukt mit 750 ml Wasser angerührt, mit 60 g 50%iger NaOH versetzt, auf 75°C erhitzt und 2 h bei dieser Temperatur gehalten. Schliesslich wird das Rohprodukt abfiltriert, in 500 ml Wasser, enthaltend 80 g 32%ige HCl, verrührt (2 h bei 90-95°C), heiss filtriert und gewaschen. Man erhält so Aluminiumphthalocyanin, das pro Mol etwa 1 mol Chlor gebunden enthält.

b) 60 Teile des nach a erhaltenen Monochloraluminiumphthalocyanins werden unter gutem Rühren in 260 Vol.-Teile Chlorsulfonsäure eingetragen. Durch Aussenkühlung wird die Temperatur bei 20 bis 25°C gehalten. Das Reaktionsgemisch wird zuerst ½ h bei Raumtemperaturgerührt, dann wird die Temperatur innerhalb 1 h auf 110 bis 115°C erhöht. Nach ½ h wird die Reaktionstemperatur innerhalb 1 h auf 130 bis 135°C gesteigert und 4 h eingehalten. Hierauf wird das Reaktionsgemisch auf 70 bis 75°C abgekühlt und innerhalb 45 min mit 125 Vol.-Teilen Thionylchlorid versetzt. Man rührt eine weitere Stunde bei 85 bis 90°C, lässt dann die Reaktionsmasse auf Raumtemperatur abkühlen und trägt sie anschliessend auf eine Eis/Wasser-Mischung aus. Die kalte Sulfochloridsuspension wird abgenutscht und mit Eiswasser säurefrei gewaschen.

Die feuchte Sulfochloridpaste wird in 1200 Teilen Wasser suspendiert. Bei 50 bis 60°C werden die Sulfochloridgruppen durch Zugabe von Natriumhydroxyd zu Sulfogruppen verseift. Durch Zusatz von katalytischen Mengen Pyridin kann die Verseifung beschleunigt werden.

Nach beendeter Verseifung wird die schwach alkalische Lösung zur Trockne eingedampft. Man erhält so 105 Teile eines gut wasserlöslichen blauen Pulvers. Aufgrund der Analyse enthält das Produkt pro Mol Aluminiumphthalocyanin 1 mol organisch gebundenes Chlor und etwa 3,5 mol Sulfonsäuregruppen, entspricht also der Formel $(AlPC)Cl(SO_3H)_{3-4}$ mit einem $\lambda_{max.}$ von 674 nm.

*Beispiel 2:*

a) In einem Rührkolben werden 118 Teile Harnstoff, 20 Teile 4-Chlorphthalsäure, 44,4 Teile Phthalsäureanhydrid, 27 Teile Xylolsulfonsäure (Isomerengemisch), 1 Teil Ammoniummolybdat, 15 Teile Aluminiumchlorid und 200 Vol.-Teile Trichlorbenzol (Isomerengemisch) gut verrührt, innerhalb 3 h auf 195 bis 205°C erwärmt und bei dieser Temperatur 16 h gerührt. Nach dem Erkalten werden 500 Vol.-Teile Isopropanol zugegeben, kurz verrührt und dann wird die Suspension abgenutscht. Der Rückstand wird mit 500 Vol.-Teilen Isopropanol gewaschen. Der Rückstand wird in 800 Vol.-Teilen verdünnter Natronlauge aufgenommen, 2 h bei 80 bis 90°C gerührt, dann abgenutscht und mit warmem Wasser gewaschen. Dann wird der gleiche Prozess in verdünnter Salzsäure durchgeführt, das erhaltene Pigment mit warmem Wasser säurefrei gewaschen und getrocknet. Es werden ca. 50 Teile Monochloraluminiumphthalocyanin (201) in Form eines blauen Pulvers erhalten.

Ersetzt man in obiger Vorschrift 4-Chlorphthalsäure durch entsprechende Mengen an Dichlorphthalsäure oder -anhydrid, Tetrachlorphthalsäure oder -anhydrid, 4-Bromphthalsäure oder -anhydrid, Tetrabromphthalsäure oder -anhydrid, 4-Jodphthalsäure oder -anhydrid oder Dijodphthalsäure oder -anhydrid, und verfährt sonst wie oben angegeben, so erhält man die folgenden halogenierten Phthalocyanine (Pigmente):

(202) Dichloraluminiumphthalocyanin
(203) Tetrachloraluminiumphthalocyanin
(204) Monobromaluminiumphthalocyanin
(205) Tetrabromaluminiumphthalocyanin
(206) Monojodaluminiumphthalocyanin
(207) Dijodaluminiumphthalocyanin

b) Die gemäss a hergestellten halogenierten Phthalocyaninpigmente 201 bis 207 werden nach der in Beispiel 1b angegebenen Methode in die entsprechenden sulfogruppenhaltigen Verbindungen übergeführt. Man erhält auf diese Weise die folgenden Verbindungen:

(211) $(AlPC)Cl(SO_3H)_{3\text{-}4}$ $\lambda_{max.}$= 674 nm
(212) $(AlPC)Cl_2(SO_3H)_{3\text{-}4}$
(213) $(AlPC)Cl_4(SO_3H)_{3\text{-}4}$
(214) $(AlPC)Br(SO_3H)_{3\text{-}4}$ $\lambda_{max.}$= 675 nm
(215) $(AlPC)Br_4(SO_3H)_{3\text{-}4}$ $\lambda_{max.}$= 677 nm
(216) $(AlPC)J(SO_3H)_{3\text{-}4}$ $\lambda_{max.}$= 678 nm
(217) $(AlPC)J_2(SO_3H)_{3\text{-}4}$

*Beispiel 3:*

a) In einem Sulfierkolben werden 44,4 Teile Phthalsäureanhydrid, 22,7 Teile 4-Bromphthalsäureanhydrid, 74 Teile Harnstoff und 17 Teile Aluminiumchlorid auf 215 bis 220°C erwärmt und 2 h bei dieser Temperatur gerührt. Nach dem Erkalten wird die starre Masse zerkleinert. Die Reinigung erfolgt durch Extraktion mit heisser verdünnter Natronlauge, heissem Wasser, heisser verdünnter Salzsäure und nochmals heissem Wasser. Nach dem Trocknen erhält man 16,5 Teile Monobromaluminiumphthalocyanin als blaues Pulver.

b) Das gemäss a erhaltene Monobromaluminiumphthalocyanin wird analog Beispiel 1b mit Chlorsulfonsäure umgesetzt und das erhaltene Monobromaluminiumphthalocyaninsulfochlorid durch alkalische Verseifung in die entsprechende Sulfonsäure übergeführt. Man erhält auf diese Weise ein Produkt, das aufgrund der Analyse pro Mol Aluminiumphthalocyanin 1 mol organisch gebundenes Brom und etwa 3,5 mol Sulfonsäuregruppen enthält und daher der Formel $(AlPC)Br(SO_3H)_3$ entspricht ($\lambda_{max.}$ = 675 nm).

Verwendet man in Beispiel 1b oder 3b statt Monochloraluminiumphthalocyanin bzw. Monobromaluminiumphthalocyanin entsprechende Mengen von Monofluor-, Monojod- oder Monocyanoaluminiumphthalocyanin und verfährt im übrigen gleich wie unter 1b bzw. 3b angegeben, so erhält man Produkte analoger Zusammensetzung, nämlich $(AlPC)F(SO_3H)_{3\text{-}4}$, $(AlPC)J(SO_3H)_{3\text{-}4}$($\lambda_{max.}$ = 678 nm) und $(AlPC)CN(SO_3H)_{3\text{-}4}$. Die fluor-, jod- oder cyanosubstituierten Aluminiumphthalocyanine können analog Beispiel 3a in bekannter Weise durch Mischsynthese aus den entsprechenden substituierten Phthalsäureverbindungen und unsubstituierten Phthalsäureverbindungen hergestellt werden.

*Beispiel 4:*

60 Teile Monochlorzinkphthalocyanin werden unter gutem Rühren in 260 Vol.-Teile Chlorsulfonsäure eingetragen. Durch Aussenkühlung wird dabei die Temperatur bei 20 bis 25°C gehalten. Das Reaktionsgemisch wird zuerst ½ h bei Raumtemperatur gerührt, dann erhöht man die Temperatur innerhalb 1 h auf 110 bis 115° C. Nach ½ h wird die Reaktionstemperatur innerhalb 1 h auf 130 bis 135°C gesteigert und 4 h eingehalten. Hierauf wird das Reaktionsgemisch auf 70 bis 75°C abgekühlt und innerhalb 45 min mit 125 Vol.-Teilen Thionylchlorid versetzt. Man rührt eine weitere Stunde bei 85 bis 90°C, lässt dann die Reaktionsmasse auf Raumtemperatur abkühlen und trägt sie anschliessend auf eine Eis/Wasser-Mischung aus. Die kalte Sulfochloridsuspension wird abgenutscht und mit Eiswasser säurefrei gewaschen.

Die feuchte Sulfochloridpaste wird in 1200 Teilen Wasser suspendiert und bei 50 bis 60°C durch Zugabe von Natriumhydroxid zum Natriumsalz der Monochlorzinkphthalocyaninsulfonsäure verseift. Die schwach alkalische Lösung wird zur Trockne eingedampft. Man erhält so ein gut wasserlösliches blaues Pulver. Dieses Produkt entspricht der Formel $(ZnPC)Cl(SO_3H)_{3\text{-}4}$ ($\lambda_{max.}$ = 670 nm).

Das als Ausgangsprodukt verwendete Monochlorzinkpthalocyanin wird nach dem bekannten Harnstoffverfahren durch Mischsynthese von 1 Eq 4-Chlorphthalsäureanhydrid mit 3 Eq Phthalsäureanhydrid unter Zugabe von wasserfreiem $ZnCl_2$ hergestellt (analog Beispiel 3a).

Auf analoge Weise werden die Zinkphthalocyaninsulfonsäuren der Formeln $(ZnPC)F(SO_3H)_{3\text{-}4}$, $(ZnPC)Br(SO_3H)_{3\text{-}4}$, $(ZnPC)J(SO_3H)_{3\text{-}4}$ und $(ZnPC)CN(SO_3H)_{3\text{-}4}$ erhalten.

*Beispiel 5:*

a) In einem Rührkolben wird eine innige Mischung von 150 Teilen Harnstoff, 20 Teilen 4-Chlorphthalsäure, 44,4 Teilen Phthalsäureanhydrid, 27 Teilen Xylolsulfonsäure (Isomerengemisch), 1 Teil Ammoniummolybdat und 20 Teilen Zinkchlorid langsam auf 150°C erwärmt. Nach 2 h wird die Temperatur auf 180 bis 190°C gesteigert und weitere 12 h gerührt. Die erkaltete Masse wird fein zerkleinert, mit 200 Vol.-Teilen Isopropanol verrührt, abgenutscht und der Rückstand mit 200 Vol.-Teilen Aceton gewaschen. Der Rückstand wird in 800 Vol.-Teilen verdünnter Natronlauge 2 h bei 80 bis 90°C gerührt, abgenutscht und

mit warmem Wasser gewaschen. Dann wird der Rückstand in verdünnter Salzsäure 2 h bei 80 bis 90°C gerührt, abgenutscht, mit Wasser säurefrei gewaschen und getrocknet. Man erhält so 34 Teile Monochlorzinkphthalocyanin 501 in Form eines blauen Pulvers.

Ersetzt man in obiger Vorschrift 4-Chlorphthalsäure durch entsprechende Mengen an Tetrachlor-, 4-Brom-, Tetrabrom-, 4-Jod- oder Dijodphthalsäure und verfährt sonst wie oben angegeben, so erhält man die folgenden halogenierten Phthalocyanine (Pigmente):

(502) Tetrachlorzinkphthalocyanin
(503) Monobromzinkphthalocyanin
(504) Tetrabromzinkphthalocyanin
(505) Monojodzinkphthalocyanin
(506) Dijodzinkphthalocyanin

b) Die gemäss a hergestellten halogenierten Phthalocyaninpigmente 501 bis 506 werden nach der in Beispiel 4 angegebenen Methode in die entsprechenden sulfogruppenhaltigen Verbindungen übergeführt. Man erhält auf diese Weise die folgenden Verbindungen:

(511) $(ZnPC)Cl(SO_3H)_{3-4}$ $\lambda_{max.} = 670$ nm
(512) $(ZnPC)Cl_4(SO_3H)_{3-4}$ $\lambda_{max.} = 672$ nm
(513) $(ZnPC)Br(SO_3H)_{3-4}$ $\lambda_{max.} = 669$ nm
(514) $(ZnPC)Br_4(SO_3H)_{3-4}$
(515) $(ZnPC)J(SO_3H)_{3-4}$
(516) $(ZnPC)J_3(SO_3H)_{3-4}$

*Beispiel 6:*

*Prüfung der Aktivität gegen Bakterien und Fungi Methode*

Einer wässerigen Lösung, die $(AlPC)Br(SO_33H)_{3-4}$ bzw. $(AlPC)J(SO_3H)_{3-4}$ in einer Konzentration von 0,01, 0,1 und 1,0 ppm enthält, wird eine Keimsuspension von *Staphylococcus aureus* ATCC 6538 mit einer definierten Keimmenge pro Milliliter zugegeben. Diese Testsuspension befindet sich in einem Becherglas unter einer wassergekühlten Glasplatte, um Erwärmung durch die nachfolgende Belichtung zu vermeiden. Es wird nun mit einer Glühlampe oder einer Infrarotlampe (Infrarotlampe (weiss), Philips IR, 250 W, Typ 13372 E/06), die sich in einem Abstand von 20 cm über der Suspensionsoberfläche befindet, 5, 10, 20, 30 bzw. 60 min lang bestrahlt. Danach wird in üblicher Weise die Keimzahl durch Parallelzählungen bestimmt. Die jeweilige Keimreduktion wird in Zehnerpotenzen nach der Formel $\bar{x} = -\log_{10}\frac{N}{N_0}$ berechnet, wobei $N_0$ die Keimeinsaat und N die Zahl der überlebenden Keime ist (Mittelwerte aus 5 bis 10 Parallelzählungen).

Zum Vergleich wird in genau derselben Weise die Aktivität von $(AlPC)(SO_3H)_{3-4}$ bestimmt.

In der folgenden Tabelle 1 sind die erhaltenen Keimreduktionen $\bar{x}$ zusammengefasst.

*Tabelle 1*

| | ppm | Expositionszeit (min) | | | | |
|---|---|---|---|---|---|---|
| | | 5 | 10 | 20 | 30 | 60 |
| $(AlPC)(SO_3H)_{3-4}$ | 0,01 | zu geringe Wirkung | | | 0,1 | 0,5 |
| | 0,1 | | 0,2 | 0,9 | 1,2 | 2,0 |
| | 1,0 | 0,9 | 1,6 | 2,3 | 2,7 | 3,4 |
| $(AlPC)Br(SO_3H)_{3-4}$ | 0,01 | | 0,7 | 1,5 | 2,0 | 2,9 |
| | 0,1 | 1,6 | 2,4 | 3,2 | 3,7 | 4,5 |
| | 1,0 | 3,3 | 4,0 | >4,6 | >4,6 | >4,6 |
| $(AlPC)J(SO_3H)_{3-4}$ | 0,01 | 1,0 | 1,8 | 2,7 | >4,6 | >4,6 |
| | 0,1 | 2,3 | 3,6 | >4,6 | >4,6 | >4,6 |
| | 1,0 | 4,1 | >4,6 | >4,6 | >4,6 | >4,6 |

Die Ergebnisse in der Tabelle zeigen, dass mit den Verbindungen $(AlPC)Br(SO_3H)_{3-4}$ und $(AlPC)J(SO_3H)_{3-4}$ ausgezeichnete antibakterielle Wirkung zu erzielen ist, auch bei ausserordentlich kurzen Belichtungszeiten. Diese Werte sind erheblich besser als jene, die mit der entsprechenden nicht halogenierten Verbindung der Formel $(AlPC)(SO_3H)_{3-4}$ erreicht werden.

Ähnlich gute Ergebnisse werden mit den Verbindungen $(AlPC)F(SO_3H)_{3-4}$, $(AlPC)Cl(SO_3H)_{3-4}$, $(AlPC)CN(SO_3H)_{3-4}$, $(AlPC)Cl_2(SO_3H)_{3-4}$, $(AlPC)Br(SO_3H)_{3-4}$, $(AlPC)Br_4(SO_3H)_{3-4}$, $(AlPC)J(SO_3H)_{3-4}$, $(AlPC)J_2(SO_3H)_{3-4}$, $(ZnPC)Cl(SO_3H)_{3-4}$, $(ZnPC)Br(SO_3H)_{3-4}$, $(ZnPC)J(SO_3H)_{3-4}$, $(ZnPC)Cl_4(SO_3H)_{3-4}$, $(ZnPC)Br_4(SO_3H)$ und $(ZnPC)J_2(SO_3H)_{3-4}$ erzielt.

Im vorstehend beschriebenen Testverfahren werden anstelle von *Staphylococcus aureus* ATCC 6538 als Testkeime auch noch die folgenden Bakterien und Fungi eingesetzt:

*Strept. faecalis* var. *zymogenes* NCTC 5957
*Escherichia coli* NCTC 8196
*Pseudomonas aeruginosa* ATCC 15442
*Proteus vulgaris* ATCC 6896
*Aspergillus niger* ATCC 6275
*Candida albicans* ATCC 10259
*Trichophyton mentagrophytes* ATCC 9533

Die oben angeführten Zink- und Aluminiumphthalocyaninsulfonsäuren mit einem Halogenatom bzw. einer Cyanogruppe im Molekül zeigen auch gegenüber diesen Testkeimen ausgezeichnete Wirkungen. Die Wirkung jeder dieser Verbindungen ist deutlich besser als jene der entsprechenden

reinen Zink- oder Aluminiumphthalocyaninsulfonsäure (ohne zusätzliches Halogen oder Pseudohalogen im Molekül).

*Beispiel 7:*

*Prüfung der Desinfektionswirkung auf Textilien*

Ein Stück Baumwollgewebe wird auf einem Metallrechen aufgespannt und mit einer im Beispiel 6 beschriebenen Prüfsuspension (enthaltend $(AlPC)Br(SO_3H)_{3-4}$ und einen Testkeimstamm) beimpft. Der Metallrechen, der an einen Motor angeschlossen ist, wird nun gedreht und mit einer Infrarotlampe bestrahlt. Zwischen Lampe und Gewebestück ist eine Glasplatte angebracht, die mit fliessendem Wasser gekühlt wird, um eine Erwärmung des Gewebestückes zu vermeiden. Unter gleichen Versuchsbedingungen wird parallel dazu ein Gewebestück behandelt, auf das jedoch keine mikrobizide Wirksubstanz aufgebracht worden war. Nach 1stündiger Belichtung werden die Keimzahlen quantitativ ermittelt und die durch das jeweilige Phthalocyanin bewirkte Keimreduktion festgestellt. Getestet wurde die Wirkung von $(AlPC)Br(SO_3H)_{3-4}$ gegenüber *Strept. faecalis* var. *zymogenes* NCTC 5957. Es wurde etwa dieselbe Keimreduktion festgestellt wie in Beispiel 6.

*Beispiel 8:*

*Oberflächendesinfektion*

Emaillierte Fliesen der Grösse 4×4 cm werden mit einer *Staphylococcus aureus* ATCC 6538-Keimsuspension beimpft; ca. $10^5$ Keime werden dabei gleichmässig auf die Oberfläche einer Fliese verteilt. Dann wird auf die Oberfläche eine 1 ppm der Verbindungen der Formel $(AlPC)Cl(SO_3H)_{3-4}$, $(AlPC)Br(SO_3H)_{3-4}$ oder $(AlPC)J(S_3H)_{3-4}$ enthaltende wässerige Lösung aufgesprüht. Die Oberfläche wird dann mit einer Glühlampe (250 W, Abstand: 20 cm) 30 bzw. 45 min bestrahlt. Nach dieser Zeit erfolgt die Probenentnahme durch Abklatschen in Rodac-Schalen. Nach 30 min ist bei Behandlung mit $(AlPC)Cl(SO_3H)_{3-4}$ lediglich noch 1 Kolonie zu beobachten, während im Falle der beiden anderen getesteten Verbindungen sowie bei einer Expositionszeit von 45 min bei allen 3 getesteten Verbindungen überhaupt kein Wachstum des Keimes mehr zu beobachten ist.

Verwendet man die übrigen im Beispiel 6 als Testverbindungen angegebenen halogenierten bzw. CN-substituierten Phthalocyaninsulfonsäuren im oben beschriebenen Oberflächendesinfektionstest, so erhält man ähnlich gute Resultate. Nach 45minütiger Expositionszeit ist bei Behandlung mit allen getesteten Verbindungen kein Keimwachstum auf der Oberfläche mehr festzustellen.

*Beispiel 9:*

*Entkeimung eines Kläranlageeffluenten*

Es wird eine Schlammprobe aus einer Laborkläranlage entnommen und durch ein Papierfilter filtriert. Zu dem Filtrat, das ca. $10^6$ Keime pro Milliliter enthält, wird jeweils eine der zu prüfenden Phthalocyaninverbindungen der Formeln $(AlPC)Cl(SO_3H)_{3-4}$, $(AlPC)Br(SO_3H)_{3-4}$, bzw. $(AlPC)J(SO_3H)_{3-4}$ zugegeben, bis deren Konzentration im Filtrat 1 ppm beträgt. Danach wird letzteres mit Standardlicht 380-730 nm, 300 $mW/cm^2$, beleuchtet. Nach verschiedenen Zeitabständen wird die verbliebene Keimzahl bestimmt. Nach 45 min. sind bereits keine Staphylokokken mehr vorhanden. Nach längerer Belichtungsdauer (eine bis mehrere Stunden) nimmt auch die Zahl der übrigen im Filtrat vorhandenen Keime deutlich ab.

*Beispiel 10:*

*Entkeimung von Schwimmbecken*

Im Freien werden Schwimmbecken mit je 5000 l Wasser Inhalt aufgestellt. Das Wasser eines Beckens wird mit der Verbindung der Formel $(AlPC)Cl(SO_3H)_{3-4}$ in einer Konzentration von 0,5 pppm versetzt. In Abständen von 1 bis 5 d werden Wasserproben entnommen und die Keimzahlen quantitativ bestimmt. In der mikrobiologischen Prüfung wird a die Gesammtkeimzahl und b die Zahl der koliformen Keime bestimmt.

*Ergebnis:* Im Becken, das keine Monochloraluminiumphthalocyaninsulfonsäure enthält, vermehren sich die koliformen Keime auf 2-3 $10^1$ Keime/100 ml. Im die Wirksubstanz enthaltenden Becken werden bis zum 16. Versuchstag keine koliformen Keime festgestellt.

Für einen weiteren Test wird am 16. Versuchstag dem Wasser eine Keimsuspension enthalden *Staphylococcus aureus* ATCC 6538 und *Escherichia coli* ATCC 11229 in einer Menge von je 50 Keimen/pro 100 ml Beckeninhalt zugegeben. Eine Messung ergibt sofort nach dem Keimeinsatz eine gleichmässige Verteilung im Becken. Nach 24 h werden im die Wirksusbstanz enthaltenden Becken keine koliformen Keime sowie keine Staphylokokken nachgewiesen (Entnahme jeweils 100 ml Wasser). Die Gesamtkeimzahl, bestehend aus autochtoner (schwimmbeckeiengener) Keimflora blieb während der Versuchsdauer konstant.

*Beispiel 11:*

Ein 1 g schweres, mit Tee angeschmutztes Baumwollgewebe* wird bei 55°C unter Beleuchtung mit einer 200 W Glühlampe** 1 h lang unter Rühren mit 200 ml einer wässerigen Waschflotte behandelt, die 0,75 ppm $(AlPC)Cl(SO_3H)_{3-4}$ (hergestellt nach Beispiel 1 oder 2) und 1 g eines Waschmittels der folgenden Zusammensetzung enthält:

| | |
|---|---|
| Natriumdodecylbenzosulfonat | 16% |
| Natriumtripolyphosphat | 43% |
| Natriumsilikat | 4% |
| Magnesiumsilikat | 2% |
| Fettalkoholsulfat | 4% |
| Natriumcarboxymethycellulose | 1% |
| Natriumsalz der Äthylendiamintetra-essigsäure | 0,5% |
| Natriumsulfat | 29,5% |

Anschliessend wird das Gewebestück visuell beurteilt, wobei sich zeigt, dass seine Helligkeit weit über jene des angeschmutzten Gewebes liegt.

Das wie oben behandelte Gewebestück ist aber auch deutlich heller als ein unter vergleichbaren Bedingungen erhaltenes, wobei jedoch 0,75 ppm reines $(AlPC)(SO_3H)_{3\text{-}4}$ (ohne kerngebundenes Chlor) als Photobleichmittel eingesetzt wird.

Messungen der Gewebeproben in bezug auf ihre Helligkeitswerte mit einem ® Elrepho-Photometer der Fa. Zeiss bestätigen den visuellen Eindruck.

Ähnlich gute Ergebnisse wie mit $(AlPC)Cl(SO_3H)_{3\text{-}4}$ werden erhalten, wenn man letzeres durch $(AlPC)F(SO_3H)_{3\text{-}4}$, $(AlPC)Br(SO_3H)_{3\text{-}4}$, $(AlPC)J(SO_3H)_{3\text{-}4}$, $(AlPC)CN(SO_3H)_{3\text{-}4}$, $(AlPC)Br_4(SO_3H)_{3\text{-}4}$, $(AlPC)Cl_2(SO_3H)_{3\text{-}4}$, $(AlPC)Cl_4(SO_3H)_{3\text{-}4}$, $(ZnPC)Cl_4(SO_3H)_{3\text{-}4}$, $(ZnPC)Br_4(SO_3H)_{3\text{-}4}$, $(ZnPC)Cl(SO_3H)_{3\text{-}4}$, $(ZnPC)F(SO_3H)_{3\text{-}4}$, $(ZnPC)Br(SO_3H)_{3\text{-}4}$ oder $(ZnPC)J(SO_3H)_{3\text{-}4}$ ersetzt.

* *Die Anschmutzung des Baumwollmusters mit Tee wird folgendermassen durchgeführt:* 15 g Tee Fine Ceylon Fannings Tea werden in 600 ml entsalztem Wasser 1 h lang gekocht und anschliessend filtriert. Die filtrierten Teeblätter werden mit 400 ml entsalztem Wasser aufgenommen und erneut ca. 60 min gekocht. Die beiden Filtrate werden vereint und mit entsalztem Wasser auf 1000 ml aufgefüllt. In diesem Tee werden 45 g Baumwollgewebe (gebleicht und laugiert) unter stetiger Bewegung bei 100°C während 2½ h behandelt, sodann färbt man auf abkühlendem Bade weitere 16 h. Danach wird die Teeflotte mit 5 g Kochsalz versetzt und nochmals 2½ h bei 100°C behandelt. Schliesslich wird abgekühlt und die angeschmutzte Baumwolle zweimal bei 60°C gespült und bei 100°C getrocknet. Abschliessend wird das angeschmutze Gewebe noch mit einer Flotte, die 5 g/l Waschmittel (Zusammensetzung s. oben) enthält, bei 90°C 20 min und einem Flottenverhältnis von 1:20 gewaschen, warm und kalt gespült und bei 100°C in einem Umluftofen getrocknet.

** *Verwendete Lampe:* Luxram-Glühlampe 220/230 V, 200 W E 27, matt. Die Lampe ist ca. 10 cm über der Waschflotte angebracht. Gemessene Beleuchtungsstärke: 19 000 lx.

*Beispiel 12:*

Jeweils 10 Muster à 1 g eines mit einem braunen Farbstoff* gefärbten Baumwollgewebes werden in eine Waschflotte gegeben, die 4 g/l eines Waschmittels der in Beispiel 11 angegebenen Zusammensetzung sowie eine bestimmte, aus der nachfolgenden Tabelle ersichtliche Menge (in Gewichtsprozent, bezogen auf das Gewebegewicht) von $(AlPC)Cl(SO_3H)_{3\text{-}4}$, $(AlPC)Br(SO_3H)_{3\text{-}4}$, $(AlPC)J(SO_3H)_{3\text{-}4}$ und zu Vergleichszwecken von $(AlPC)(SO_3H)_{3\text{-}4}$ enthält. Unter ständiger Bewegung der zu bleichenden Muster werden diese bei 50°C während 60 min bei einem Flottenverhältnis 1:100 und unter Belichtung mit einer Infrarotlampe** gewaschen. Die Muster werden danach gespült, getrocknet, und anschliessend wird der Bleichgrad der getrockneten Muster mit Hilfe eines Elrepho-Photometers der Fa. Zeiss (Normlichtart D 65, 2° Normalbeobachter, Messblende 35 mm ⌀) in Form von Helligkeitswerten, ausgedrückt in Prozent, bezogen auf das Absolutweiss gemäss CIE-Empfehlung vom 1.1.1969, gemessen. Die erhaltenen Werte sind in der folgenden Tabelle 2 angeführt und stellen Mittelwerte dar.

*Tabelle 2*

| Geprüfte Verbindung | Menge in der Waschflotte (%) | Helligkeitswert (%) |
|---|---|---|
| $(AlPC)Cl(SO_3H)_{3\text{-}4}$ | 0,0035 | 80,20 |
| $(AlPC)Br(SO_3H)_{3\text{-}4}$ | 0,002 | 81,67 |
| $(AlPC)J(SO_3H)_{3\text{-}4}$ | 0,0023 | 81,05 |
| $(AlPC)(SO_3H)_{3\text{-}4}$ | 0,004 | 80,20 |
| — (= Testgewebe ungebleicht) | — | 56,5 |

Die Ergebnisse in der Tabelle 2 zeigen, dass die halogenhaltigen Aluminiumphthalocyaninsulfonsäurederivate bei geringeren Einsatzmengen gleich hohe oder sogar höhere Bleichgrade erzielen als die zum Vergleich herangezogene nicht halogenierte Aluminiumphthalocyaninsulfonsäure $(AlPC)(SO_3H)_{3\text{-}4}$.

Bei Verwendung der entsprechenden analogen Zinkphthalocyaninderivate kommt man zu ähnlichen Ergebnissen.

* *Die Färbung der Baumwollmuster wird folgendermassen durchgeführt:* 150 mg des im Handel erhältlichen braunen Farbstoffes der Formel

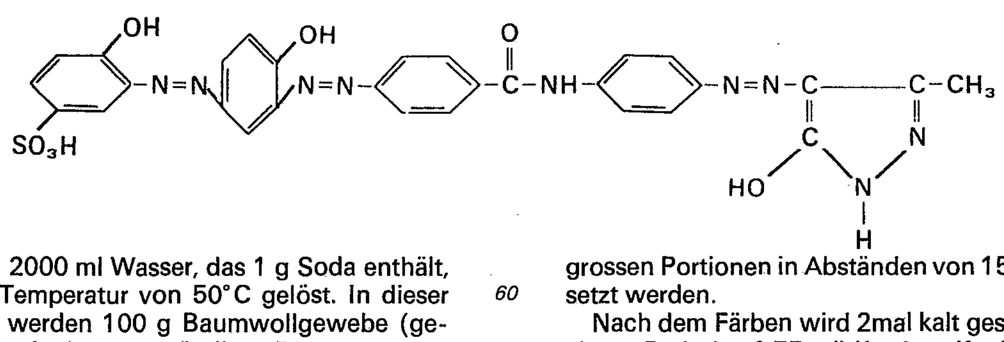

werden in 2000 ml Wasser, das 1 g Soda enthält, bei einer Temperatur von 50°C gelöst. In dieser Farbflotte werden 100 g Baumwollgewebe (gebleicht, laugiert) unter ständiger Bewegung gefärbt, indem das Bad während 30 min auf 90°C erhitzt wird. Bei 90°C färbt man 90 min, wobei in dieser Zeitspanne 20 g Glaubersalz in 4 gleichgrossen Portionen in Abständen von 15 min zugesetzt werden.

Nach dem Färben wird 2mal kalt gespült und in einem Bad, das 0,75 g/l Kupfersulfat kristallisiert und 1 ml/l Eisessig enthält, bei 60°C und einem Flottenverhältnis von 1:20 20 min lang gekupfert. Anschliessend wird die Färbung 2mal kalt gespült

und in einem Heissluftofen bei 100° C getrocknet.
** *Verwendete Lampe:* Philips-Infrarot-Lampe (weiss), 220/230 V, 250 W mit Reflektor, Typ 13372 E/06. Die Lampe ist ca. 15 cm über der Flotte angebracht.

*Beispiel 13:*

10 g eines gemäss Beispiel 12 mit braunem Farbstoff gefärbten Baumwollmusters werden in 200 ml Wasser gegeben, worin 0,75 mg (AlPC)Br-$(SO_3H)_{3-4}$, (AlPC)J$(SO_3H)_{3-4}$ oder (AlPC)Cl-$(SO_3H)_{3-4}$ und 0,2 g Natriumtripolyphosphat gelöst sind. Die Flotte wird unter ständiger Bewegung auf 75°C erwärmt und 90 min bei dieser Temperatur belassen, wobei jeweils in 10minütigen Abständen 4 g Glaubersalz in 4 gleich grossen Portionen zugesetzt werden. Danach wird das Gewebemuster kurz kalt gespült und in einem Umluftofen bei 100° C getrocknet. Alle vorbeschriebenen Operationen werden unter weitgehendem Ausschluss von Licht ausgeführt.

Zu Vergleichszwecken wird ein gleichartiges Gewebemuster behandelt, wobei statt 0,75 mg der oben erwähnten halogenierten Phthalocyaninsulfonsäuren dieselbe Menge an nicht halogenierte Aluminiumphthalocyaninsulfonsäure (AlPC)$(SO_3H)_{3-4}$ eingesetzt wird.

Die gefärbten Gewebemuster werden sodann mit einer Pufferlösung vom pH 10 (Zusammensetzung: 0,03 mol/l Dinatriumtetraborat und 0,042 mol/l Natriumhydroxyd) befeuchtet und unter einem Überkopfprojektor (Portable Projector Modell 088/88 BH der Fa. 3M mit einer Lampe Typ 78-8454/3480 der Fa. General Electric, 240 V, 480 W) bei Zimmertemperatur belichtet, wobei die Gewebestücke unter einer Glasplatte in einem Abstand von 30 cm unter der Lampe liegen (gemessene Beleuchtungsstärke: 46 000 lx). Zu Kontrollzwecken wird auch ein braun gefärbtes Gewebestück ohne Behandlung mit einem Aluminiumphthalocyanin in derselben Weise belichtet.

Zur Bestimmung des bei der Belichtung zerstörten Braunfarbstoffes und der Menge der auf dem Gewebe zurückbleibenden Phthalocyaninverbindungen werden die Muster farbmetrisch gegen Eichfärbungen ausgewertet. Es zeigt sich, dass mit (AlPC)Cl$(SO_3H)_{3-4}$, (AlPC)Br$(SO_3H)_{3-4}$ und (AlPC)J$(SO_3H)_{3-4}$ bei verschiedenen Belichtungszeiten mehr Braunfarbstoff zerstört wird als mit nicht halogenierter Aluminiumphthalocyaninsulfonsäure.

Verwendet man anstelle der Aluminiumverbindungen die entsprechenden, gemäss Beispiel 4 bzw. 5 hergestellten Zinkverbindungen oder die Aluminiumverbindungen der Formeln (AlPC)$Cl_2$-$(SO_3H)_{3-4}$, (AlPC)$Cl_4(SO_3H)_{3-4}$, (AlPC)F-$(SO_3H)_{3-4}$, (AlPC)$Br_4(SO_3H)_{3-4}$ oder (AlPC)$J_2$-$(SO_3H)_{3-4}$, so erhält man ähnliche Resultate.

*Beispiel 14:*

Jeweils 10 Muster à 1 g eines gemäss Beispiel 12 mit einem braunen Farbstoff gefärbten Baumwollgewebes werden in eine Waschflotte gegeben, die 4 g/l eines Waschmittels der in Beispiel 11 angegebenen Zusammensetzung sowie 0,005 bzw. 0,01 Gew.-%, bezogen auf das Gewebegewicht, (ZnPC)Cl$(SO_3H)_{3-4}$, (ZnPC)Br$(SO_3H)_{3-4}$, (ZnPC)$Cl_3(SO_3H)_{3-4}$ und zu Vergleichszwecken (ZnPC)$(SO_3H)_{3-4}$ enthält. Unter ständiger Bewegung der zu bleichenden Muster werden diese bei 50° C während 60 bzw. 120 min bei einem Flottenverhältnis 1:100 und unter Belichtung mit einer Infrarotlampe (s. Beispiel 12) gewaschen. Die Muster werden danach gespült, getrocknet, und anschliessend wird der Bleichgrad der getrockneten Muster mit Hilfe eines Elrepho-Photometers der Fa. Zeiss (Normlichtart D 65, 2° Normalbeobachter, Messblende 35 mm ⌀) in Form von Helligkeitswerten (Y), ausgedrückt in Prozent, bezogen auf das Absolutweiss gemäss CIE-Empfehlung vom 1.1.1969, gemessen. Die erhaltenen Werte sind in der folgenden Tabelle 3 angeführt und stellen Mittelwerte dar.

*Tabelle 3*

| Geprüfte Verbindung | Menge in der Waschflotte (in Gew.-% bzw. auf das Gewebegewicht) | Helligkeitswerte Y nach (%) | |
|---|---|---|---|
| | | 60 min | 120 min |
| (ZnPC)$(SO_3H)_{3-4}$ | 0,005<br>0,01 | 74,2<br>76,4 | 75,6<br>79,0 |
| (ZnPC)Cl$(SO_3H)_{3-4}$ | 0,005<br>0,01 | 80,6<br>83,0 | 82,1<br>85,3 |
| (ZnPC)$Cl_4(SO_3H)_{3-4}$ | 0,005<br>0,01 | 79,6<br>82,1 | 82,3<br>85,3 |
| (ZnPC)Br$(SO_3H)_{3-4}$ | 0,005<br>0,01 | 80,6<br>81,5 | 83,9<br>84,7 |
| —<br>(= Testgewebe ungebleicht) | — | 50,3 | |

Die Ergebnisse in Tabelle 3 zeigen, dass die halogenhaltigen Zinkphthalocyaninsulfonsäuren deutlich höhere Helligkeitswerte erzielen als die zum Vergleich herangezogene nicht halogenierte Zinkphthalocyaninsulfonsäure. Oder, anders ausgedrückt, die halogenhaltigen Verbindungen können in wesentlich geringeren Mengen eingesetzt werden als das nicht halogenierte Produkt, um den gleichen oder einen besseren Helligkeitswert zu erreichen.

*Beispiel 15:*

Der Waschvorgang von Beispiel 14 wird wiederholt, wobei jedoch a) die Einsatzmenge der jeweiligen Testverbindung 0,015 Gew.-%, bezogen auf das Gewicht des Baumwollgewebes, beträgt, b) die fertige Flotte vor der Einbringung des Baumwollgewebes 30 min lang vorbelichtet wird, und c) die Belichtungszeit nach Zugabe des Gewebes (=Bleichzeit) nur 60 min beträgt.

Die Messung des Bleichgrades der Gewebemuster erfolgt wie in Beispiel 14 beschrieben. In der nachfolgenden Tabelle 4 sind die erhaltenen Werte zusammengefasst. Die einzelnen Werte stellen einen Mittelwert aus den 10 Einzelmessungen dar.

*Tabelle 4*

| Geprüfte Verbindung | Helligkeitswert (Y) |
|---|---|
| $(ZnPC)(SO_3H)_{3-4}$ | 70,6 |
| $(ZnPC)Cl(SO_3H)_{3-4}$ | 79,4 |
| $(ZnPC)Cl_4(SO_3H)_{3-4}$ | 78,2 |
| $(ZnPC)Br(SO_3H)_{3-4}$ | 77,8 |
| — | 51,1 |

Die Resultate in Tabelle 4 zeigen, dass für den Fall, dass die Flotte vor dem eigentlichen Waschvorgang einer Belichtung ausgesetzt wird, die halogenierten Phthalocyaninsulfonsäuren überraschenderweise noch wesentlich höhere Helligkeitswerte erzielen als die entsprechende nicht halogenierte Verbindung. Dieser Umstand ist praktisch von Bedeutung, z.B. wenn eine Hausfrau die Waschflotte zubereitet und sie am Licht (z.B. im Freien) stehen lässt, ohne sofort mit dem Waschen zu beginnen. In diesem Fall ergeben die halogenierten Phthalocyaninverbindungen wesentlich bessere Bleicheffekte.

Auch die übrigen in den Beispielen 1 bis 5 genannten Phthalocyaninverbindungen ergeben ähnlich gute Resultate.

*Beispiel 16:*

Jeweils 5 g eines mit Rotwein angeschmutzten Testgewebes (EMPA-Testgewebe Nr. 114, erhältlich bei der Eidgenössischen Materialprüf- und Versuchsanstalt, Unterstrasse 11, CH-9001 St. Gallen werden bei einem Flottenverhältnis von 1:50 bei 50°C während 30 min in einer Flotte gewaschen, die 5 g/l eines Waschmittels der in Beispiel 11 angegebenen Zusammensetzung und 0,005 Gew.-%, bezogen auf das Gewicht des Testgewebes, $(AlPC)(SO_3H)_{3-4}$ bzw. $(AlPC)Br_4(SO_3H)_{3-4}$ enthält. Zum Vergleich wird ein Gewebestück in einer Flotte ohne Phthalocyaninverbindung gewaschen. Nach dem Waschen werden die Gewebestücke kurz gespült und dann 2 h lang in die Mittagssonne gelegt und mehrmals befeuchtet. Danach wird der Bleichgrad (Helligkeit) der Gewebemuster bestimmt, wie in Beispiel 14 angegeben. Die erhaltenen Helligkeitswerte (Y) sind in der nachstehenden Tabelle 5 zusammengefasst.

*Tabelle 5*

| Waschvorgang | Helligkeitswert (Y) |
|---|---|
| 1) ohne Phthalocyaninverbindung | 66,2 |
| 2) mit 0,005% $(AlPC)(SO_3H)_{3-4}$ | 79,8 |
| 3) mit 0,005% $(AlPC)Br_4(SO_3H)_{3-4}$ | 83,4 |
| Testgewebe ohne Waschen | 43,6 |

Die Ergebnisse in Tabelle 5 zeigen erneut, dass die halogenierte Phthalocyaninsulfonsäure einen wesentlich besseren Bleich(Fleckentfernungs)effekt liefert als die entsprechende nicht halogenierte Verbindung.

**Patentansprüche** für die Vertragsstaaten: BE, CH, DE, FR, IT, LI, LU, NL, SE

1. Verfahren zum Bleichen von bzw. Fleckenentfernen aus Textilien und zum Bekämpfen von Mikroorganismen in oder auf organischen oder anorganischen Substraten bzw. zum Schützen derselben vor dem Befall durch Mikroorganismen, durch Behandeln der Textilien bzw. der von Mikroorganismen zu befreienden oder zu schützenden Substrate mit wasserlöslichen Zink- oder Aluminiumphthalocyaninen in Gegenwart von Wasser und unter Bestrahlung mit Licht, dadurch gekennzeichnet, dass man als wasserlösliche Zink- oder Aluminiumphthalocyanine sulfonierte Zink- oder Aluminiumphthalocyanine, die zusätzlich mit neutralen, nicht wasserlöslichmachenden Gruppen, z.B. mit Halogenatomen oder Pseudohalogenen substituiert sind, oder Mischungen von solchen Phthalocyaninen, einsetzt.

2. Verfahren nach Anspruch 1 zum Bleichen von bzw. Fleckenentfernen aus Textilien, dadurch gekennzeichnet, dass man diese in Gegenwart von Wasser und unter Bestrahlung mit Licht mit sulfonierten Zink- oder Aluminiumphthalocyaninen, die zusätzlich mit neutralen, nicht wasserlöslichmachenden Gruppen, z.B. mit Halogenatomen oder Pseudohalogenen substituiert sind, oder Mischungen von solchen Phthalocyaninverbindungen, behandelt.

3. Verfahren nach Anspruch 1 zur Bekämpfung von Mikroorganismen in oder auf organischen oder anorganischen Substraten bzw. zum Schützen derselben vor dem Befall durch Mikroorganismen, dadurch gekennzeichnet, dass man die genannten Substrate in Gegenwart von Wasser und unter Bestrahlung mit Licht mit sulfonierten Zink- oder Aluminiumphthalocyaninen, die zusätzlich mit neutralen, nicht wasserlöslichmachenden Gruppen, z.B. mit Halogenatomen oder Pseudohalogene substituiert sind, oder Mischungen von solchen Phthalocyaninverbindungen, behandelt.

4. Verfahren nach einem der Ansprüche 1 bis 3, dadurch gekennzeichnet, dass man als Zink- oder Aluminiumphthalocyanine solche der Formel

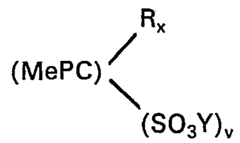

(1)

einsetzt, worin MePC für das Zink- oder Aluminiumphthalocyaninringsystem steht, Y Wasserstoff, ein Alkalimetall-, Ammonium- oder Aminsalzion, v eine beliebige Zahl zwischen 1 und 4, R Fluor, Chlor, Brom, Jod oder Cyano und x eine beliebige Zahl zwischen 0,1 und 8 bedeuten, wobei die im Molekül vorhandenen R gleich oder verschieden sein können.

5. Verfahren nach Anspruch 4, dadurch gekennzeichnet, dass man als Zink- oder Aluminiumphthalocyanine solche der Formel

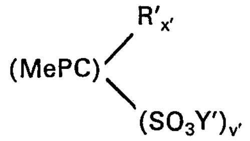

(2)

einsetzt, worin MePC für das Zink- oder Aluminiumphthalocyaninringsystem, vorzugsweise für das Aluminiumphthalocyaninringsystem steht, Y' Wasserstoff, ein Alkalimetall- oder Ammoniumion, v' eine beliebige Zahl zwischen 1,3 und 4, vorzugsweise zwischen 3 und 4, R' Chlor, Brom oder Jod und x' eine beliebige Zahl zwischen 0,5 und 8, vorzugsweise zwischen 0,8 und 4, bedeuten.

6. Verfahren nach Anspruch 5, dadurch gekennzeichnet, dass man ein Zink- oder Aluminiumphthalocyanin der Formel (2) einsetzt, worin Y' Wasserstoff, Natrium oder Kalium, v' eine Zahl zwischen 2 und 4, vorzugsweise zwischen 3 und 4, R' Chlor oder Brom, vorzugsweise Chlor und x' eine beliebige Zahl zwischen 0,8 und 2 bedeuten.

7. Verfahren nach einem der Ansprüche 4 bis 6, dadurch gekennzeichnet, dass man ein Phthalocyanin einer der Formeln (1) oder (2) einsetzt, worin MePC für das Aluminiumphthalocyaninringsystem steht, vorzugsweise ein solches der Formel

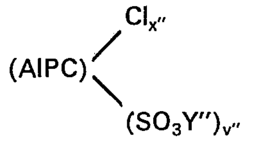

worin AlPC für das Aluminiumphthalocyaninringsystem steht, x'' eine beliebige Zahl zwischen 0,8 und 1,5, v'' eine beliebige Zahl zwischen 3 und 4 und Y'' Wasserstoff oder Natrium bedeuten.

8. Verfahren nach Anspruch 3, dadurch gekennzeichnet, dass man die Substrate in oder mit einem wässerigen Bad behandelt, das eine oder mehrere der in den Ansprüchen 3 bis 7 definierten sulfonierten Zink- oder Aluminiumphthalocyaninverbindungen enthält, oder dass diese Verbindungen den Substraten, soweit sie aus Wasser bestehen oder solches enthalten, einverleibt und dass man die Substrate dabei mit einer künstlichen Lichtquelle, vorzugsweise einer Glühlampe oder Infrarotlampe, entweder im Behandlungsbad oder ausserhalb desselben bestrahlt oder dass die Bestrahlung der Substrate mit Sonnenlicht erfolgt, entweder direkt im Behandlungsbad oder im wässerigen Substrat oder nach Herausnahme aus dem Bad in feuchtem Zustand.

9. Verfahren nach Anspruch 8 zur Entkeimung von Waschgut, dadurch gekennzeichnet, dass man das Waschgut unter Bestrahlung mit infrarotem oder/und sichtbarem Licht in einer Waschflotte wäscht, die neben üblichen Waschmittelbestandteilen 0,001 bis 100 ppm eines oder mehrerer in den Ansprüchen 3 bis 7 definierter Phthalocyaninderivate und gegebenenfalls ein anorganisches Salz enthält.

10. Verfahren nach Anspruch 8 zur Entkeimung bzw. antimikrobiellen Ausrüstung von Textilien, dadurch gekennzeichnet, dass man letztere in einer Flotte, die 0,01 bis 50 ppm eines in den Ansprüchen 3 bis 7 definierten Zink- oder Aluminiumphthalocyaninderivates enthält, behandelt, wobei das Bad direkt mit einer künstlichen Lichtquelle bestrahlt wird bzw. die Textilien später in feuchtem Zustand mit einer künstlichen Lichtquelle bestrahlt oder dem Sonnenlicht ausgesetzt werden.

11. Verfahren nach Anspruch 2, dadurch gekennzeichnet, dass man die Behandlung der Textilien in einem wässerigen Bad vornimmt, das ein oder mehrere in den Ansprüchen 2 oder 4 bis 7 definierte sulfonierte Zink- oder Aluminiumphthalocyanine in einer Konzentration von 0,01 bis 50 mg/l enthält.

12. Verfahren nach Anspruch 11, dadurch gekennzeichnet, dass man die Bestrahlung mit einer künstlichen Lichtquelle, vorzugsweise einer Glühlampe oder Infrarotlampe, entweder im Behandlungsbad oder ausserhalb desselben vornimmt oder dass die Belichtung der bereits dem Behandlungsbad entnommenen noch feuchten oder wieder befeuchteten Textilien oder die Belichtung der eingeweichten bzw. gewaschenen Textilien in Sonnenlicht erfolgt.

13. Verfahren nach einem der Ansprüche 2, 11 oder 12 zum Waschen und Bleichen von Textilien, dadurch gekennzeichnet, dass man letztere in einer Flotte behandelt, die neben der (den) sulfonierten Zink- oder/und Aluminiumphthalocyaninverbindung(en) noch übliche Waschmittelbestandteile enthält.

14. Verfahren nach Anspruch 1 zum Entkeimen von Oberflächen, z.B. von Bädern, Wänden, Möbeln usw., dadurch gekennzeichnet, dass man auf die genannten Oberflächen eine wässerige Lösung aufbringt, die ein oder mehrere in den Ansprüchen 1 bis 7 definierte Phthalocyaninverbindungen enthält, und danach die noch feuchten

Oberflächen dem Sonnenlicht aussetzt und sie gegebenenfalls zusätzlich mit einer infrarotes und/oder sichtbares Licht liefernden künstlichen Lichtquelle beleuchtet.

15. Verfahren nach Anspruch 1 zur Entkeimung des Wassers in Schwimmbädern, dadurch gekennzeichnet, dass man dem Wasser 0,001 bis 50, vorzugsweise 0,01 bis 10 ppm eines oder mehrerer in den Ansprüchen 1 bis 7 definierter Phthalocyaninderivate zusetzt, wobei das Wasser zusätzlich zum vorhandenen Sonnenlicht noch mit einer künstlichen Lichtquelle bestrahlt werden kann.

16. Verfahren nach Anspruch 1 zur Entkeimung von Effluenten aus Kläranlagen, dadurch gekennzeichnet, dass man dem Effluenten 0,001 bis 100, vorzugsweise 0,01 bis 10 ppm eines oder mehrerer in den Ansprüchen 1 bis 7 definierter Phthalocyaninderivate zusetzt, wobei zusätzlich zum vorhandenen Sonnenlicht noch eine Bestrahlung mit einer künstlichen Lichtquelle erfolgen kann.

17. Antimikrobiell wirksames Mittel und/oder Bleichmittel, enthaltend eine oder mehrere in den Ansprüchen 1 bis 7 definierte sulfonierte Zink- oder/und Aluminiumphthalocyaninverbindung(en).

18. Mittel nach Anspruch 17, enthaltend, neben einer oder mehreren in den Ansprüchen 3 bis 7 definierten sulfonierten Zink- oder/und Aluminiumphthalocyaninverbindungen, ein oder mehrere anorganische Salze, z.B. NaCl oder $Na_2SO_4$ sowie gegebenenfalls Wasser.

19. Mittel nach Anspruch 18, enthaltend 50 bis 80% einer oder mehrerer in den Ansprüchen 4 bis 7 definierte Phthalocyaninverbindungen, vorzugsweise einer im Anspruch 7 definierten Phthalocyaninverbindung, 10 bis 30% NaCl und/oder $Na_2SO_4$ und 0 bis 30% Wasser.

20. Antimikrobiell wirksames Mittel nach Anspruch 17, enthaltend eine oder mehrere in den Ansprüchen 3 bis 7 definierte sulfonierte Zink- oder/und Aluminiumphthalocyaninverbindungen und gegebenenfalls übliche Waschmittelbestandteile.

21. Bleich-, Wasch- oder Einweichmittel nach Anspruch 17, enthaltend eine oder mehrere in den Ansprüchen 2 oder 4 bis 7 definierte sulfonierte Zink- oder/und Aluminiumphthalocyaninverbindungen und gegebenenfalls übliche Waschmittelbestandteile.

22. Waschmittel nach Anspruch 21, enthaltend eine oder mehrere in den Ansprüchen 2 oder 4 bis 7 definierte sulfonierte Zink- oder/und Aluminiumphthalocyaninverbindungen, vorzugsqweise in einer Menge von 0,0005 bis 1,5 Gew.-%, bezogen auf das Gesamtmittel, ein oder mehrere organische Detergenzien, alkalische Gerüststoffsalze und gegebenenfalls weitere Bleichmittel.

23. Waschmittel nach Anspruch 21, enthaltend 10 bis 50% eines anionischen, nichtionischen, semipolaren, ampholytischen oder/und zwitterionischen oberflächenaktiven Substanz, 0,005 bis 1% eines in den Ansprüchen 2 oder 4 bis 7, vorzugsweise im Anspruch 7, definierten sulfonierten Phthalocyanins, 0 bis 80% eines alkalischen Gerüststoffsalzes, beispielsweise 10 bis 60% eines alkalischen Gerüststoffsalzes aus der Gruppe der wasserlöslichen Alkalimetallcarbonate, -borate, -phosphate, -polyphosphate, -bicarbonate und -silicate, der wasserlöslichen Aminopolycarboxylate, Phytate, Polyphosphonate und -carboxylate sowie der wasserunlöslichen Aluminiumsilicate, und gegebenenfalls weitere übliche Waschmittelbestandteile.

24. Waschmittel nach Anspruch 23, worin als oberflächenaktive Substanz wasserlösliche Alkylbenzolsulfonate, Alkylsulfate, äthoxylierte Alkyläthersulfate, Paraffinsulfonate, α-Olefinsulfonate, α-Sulfocarbonsäuren, deren Salze und Ester, Alkylglyceryläthersulfonate, Fettsäuremonoglyceridsulfate oder -sulfonate, Alkylphenolpolyäthoxyäthersulfate, 2-Acyloxyalkansulfonate, β-Alkyloxyalkansulfonate, Seifen, äthoxylierte Fettalkohole, Alkylphenole, Polypropoxyglykole, Polypropoxyäthylendiamine, Aminoxide, Phosphinoxide, Sulfoxide, aliphatische sekundäre und tertiäre Amine, aliphatische quaternäre Ammonium-, Phosphonium- und Sulfoniumverbindungen oder Mischungen der genannten Substanzen eingesetzt werden.

25. Zink- oder Aluminiumphthalocyaninverbindungen der Formel

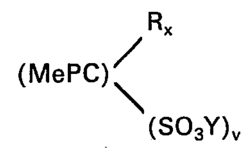
(1)

worin MePC für das Zink- oder Aluminiumphthalocyaninringsystem steht, Y Wasserstoff, ein Alkalimetall-, Ammonium- oder Aminsalzion, v eine beliebige Zahl zwischen 0,1 und 4, R Fluor, Chlor, Brom, Jod oder Cyano und x eine beliebige Zahl zwischen 0,1 und 8 bedeuten, wobei die im Molekül vorhandenen R gleich oder verschieden sein können.

26. Phthalocyaninverbindungen nach Anspruch 25 der Formel

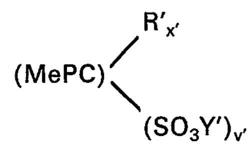
(2)

worin MePC für das Zink- oder Aluminiumphthalocyaninringsystem, vorzugsweise für das Aluminiumphthalocyaninringsystem steht, Y' Wasserstoff, ein Alkalimetall- oder Ammoniumion, v' eine beliebige Zahl zwischen 1,3 und 4, vorzugsweise zwischen 3 und 4, R' Chlor, Brom oder Jod und x' eine beliebige Zahl zwischen 0,5 und 8, vorzugsweise zwischen 0,8 und 4, bedeuten, vorzugsweise solche, worin Y' für Wasserstoff, Natrium oder Kalium, v' eine Zahl zwischen 2 und 4, vorzugsweise zwischen 3 und 4, R' Chlor oder Brom, vorzugsweise Chlor und x' eine beliebige Zahl zwischen 0,8 und 2 bedeuten.

27. Phthalocyaninverbindungen nach einem der Ansprüche 25 oder 26 einer der Formeln (1) oder (2), worin MePC für das Aluminiumphthalocyaninringsystem steht, vorzugsweise solche der Formel

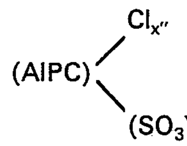

worin AlPC für das Aluminiumphthalocyaninringsystem steht, x″ eine beliebige Zahl zwischen 0,8 und 1,5, v″ eine beliebige Zahl zwischen 3 und 4 und Y″ Wasserstoff oder Natrium bedeuten.

28. Verfahren zur Herstellung von Phthalocyaninverbindungen der Formel

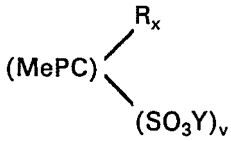 (1)

worin MePC für das Zink- oder Aluminiumphthalocyaninringsystem steht, Y Wasserstoff, ein Alkalimetall-, Ammonium- oder Aminsalzion, v eine beliebige Zahl zwischen 0,1 und 4, R Fluor, Chlor, Brom, Jod oder Cyano und x eine beliebige Zahl zwischen 0,1 und 8 bedeuten, wobei die im Molekül vorhandenen R gleich oder verschieden sein können, dadurch gekennzeichnet, dass man ein Phthalocyanin der Formel

$$(MePC)-R_x$$

sulfoniert, vorzugsweise mit Oleum, und gegebenenfalls die erhaltene Sulfonsäure in ein Salz überführt.

29. Verfahren nach Anspruch 28 zur Herstellung von Phthalocyaninverbindungen der Formel (1), dadurch gekennzeichnet, dass man ein Phthalocyanin der Formel

$$(MePC)-R_x$$

mit Chlorsulfonsäure umsetzt und das erhaltene Sulfochlorid hydrolysiert.

30. Verfahren zur Herstellung von Phthalocyaninverbindungen der Formel

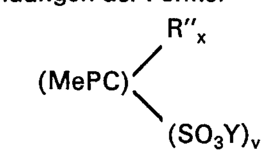 (3)

worin MePC für das Zink- oder Aluminiumphthalocyaninringsystem steht, Y Wasserstoff, ein Alkalimetall-, Ammonium- oder Aminsalzion, v eine beliebige Zahl zwischen 0,1 und 4, R″ Chlor, Brom oder Jod und x eine beliebige Zahl zwischen 0,1 und 8 bedeuten, dadurch gekennzeichnet, dass man ein sulfoniertes Phthalocyanin der Formel

$$(MePC)-(SO_3Y)_v$$

chloriert, bromiert oder jodiert.

31. Verfahren zur Herstellung von Phthalocyaninverbindungen der Formel

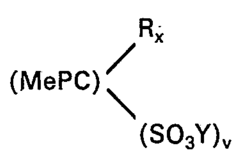 (1)

worin MePC für das Zink- oder Aluminiumphthalocyaninringsystem steht, Y Wasserstoff, ein Alkalimetall-, Ammonium- oder Aminsalzion, v eine beliebige Zahl zwischen 0,1 und 4, R Fluor, Chlor, Brom, Jod oder Cyano und x eine beliebige Zahl zwischen 0,1 und 8 bedeuten, wobei die im Molekül vorhandenen R gleich oder verschieden sein können, dadurch gekennzeichnet, dass man ein Phthalocyanin der Formel

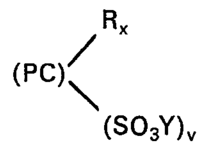

worin PC für das metallfreie Phthalocyaninringsystem steht und R, x, Y und v wie oben definiert sind, mit einem Zink- oder Aluminiumsalz oder -alkoholat umsetzt.

32. Ein nach einem des Ansprüche 28 bis 31 herstellbares sulfoniertes Zink- oder Aluminiumphthalocyanin, dessen Phthalocyaninringsystem durch $R_x$ bzw. $R''_x$ substituiert ist, wobei x, R bzw. R″ die in den Ansprüchen 28 bis 31 angegebenen Bedeutungen haben.

**Patentansprüche** für den Vertragsstaat: AT

1. Verfahren zum Bleichen von bzw. Fleckenentfernen aus Textilien und zum Bekämpfen von Mikroorganismen in oder auf organischen oder anorganischen Substraten bzw. zum Schützen derselben vor dem Befall durch Mikroorganismen, durch Behandeln der Textilien bzw. der von Mikroorganismen zu befreienden oder zu schützenden Substrate mit wasserlöslichen Zink- oder Aluminiumphthalocyaninen in Gegenwart von Wasser und unter Bestrahlung mit Licht, dadurch gekennzeichnet, dass man als wasserlösliche Zink- oder Aluminiumphthalocyanine sulfonierte Zink- oder Aluminiumphthalocyanine, die zusätzlich mit neutralen, nicht wasserlöslichmachenden Gruppen, z.B. mit Halogenatomen oder Pseudohalogenen substituiert sind, oder Mischungen von solchen Phthalocyaninen, einsetzt.

2. Verfahren nach Anspruch 1 zum Bleichen von bzw. Fleckenentfernen aus Textilien, dadurch gekennzeichnet, dass man diese in Gegenwart von Wasser und unter Bestrahlung mit Licht mit sulfonierten Zink- oder Aluminiumphthalocyaninen, die zusätzlich mit neutralen, nicht wasserlöslichmachenden Gruppen, z.B. mit Halogenatomen oder Pseudohalogenen substituiert sind, oder Mischungen von solchen Phthalocyaninverbindungen, behandelt.

3. Verfahren nach Anspruch 1 zur Bekämpfung von Mikroorganismen in oder auf organischen oder anorganischen Substraten bzw. zum Schützen derselben vor dem Befall durch Mikroorganismen, dadurch gekennzeichnet, dass man die genannten Substrate in Gegenwart von Wasser und unter Bestrahlung mit Licht mit sulfonierten Zink- oder Aluminiumphthalocyaninen, die zusätzlich mit neutralen, nicht wasserlöslichmachenden Gruppen, z.B. mit Halogenatomen oder Pseudo-

4. Verfahren nach einem der Ansprüche 1 bis 3, dadurch gekennzeichnet, dass man als Zink- oder Aluminiumphthalocyanine solche der Formel

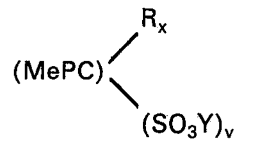 (1)

einsetzt, worin MePC für das Zink- oder Aluminiumphthalocyaninringsystem steht, Y Wasserstoff, ein Alkalimetall-, Ammonium- oder Aminsalzion, v eine beliebige Zahl zwischen 1 und 4, R Fluor, Chlor, Brom, Jod oder Cyano und x eine beliebige Zahl zwischen 0,1 und 8 bedeuten, wobei die im Molekül vorhandenen R gleich oder verschieden sein können.

5. Verfahren nach Anspruch 4, dadurch gekennzeichnet, dass man als Zink- oder Aluminiumphthalocyanine solche der Formel

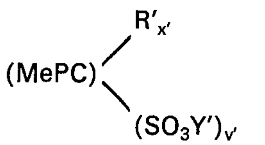 (2)

einsetzt, worin MePC für das Zink- oder Aluminiumphthalocyaninringsystem, vorzugsweise für das Aluminiumphthalocyaninringsystem steht, Y' Wasserstoff, ein Alkalimetall- oder Ammoniumion, v' eine beliebige Zahl zwischen 1,3 und 4, vorzugsweise zwischen 3 und 4, R' Chlor, Brom oder Jod und x' eine beliebige Zahl zwischen 0,5 und 8, vorzugsweise zwischen 0,8 und 4, bedeuten.

6. Verfahren nach Anspruch 5, dadurch gekennzeichnet, dass man ein Zink- oder Aluminiumphthalocyanin der Formel (2) einsetzt, worin Y' Wasserstoff, Natrium oder Kalium, v' eine Zahl zwischen 2 und 4, vorzugsweise zwischen 3 und 4, R' Chlor oder Brom, vorzugsweise Chlor und x' eine beliebige Zahl zwischen 0,8 und 2 bedeuten.

7. Verfahren nach einem der Ansprüche 4 bis 6, dadurch gekennzeichnet, dass man ein Phthalocyanin einer der Formeln (1) oder (2) einsetzt, worin MePC für das Aluminiumphthalocyaninringsystem steht, vorzugsweise ein solches der Formel

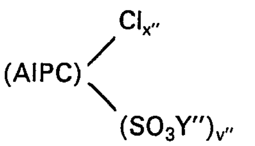

worin AlPC für das Aluminiumphthalocyaninringsystem steht, x'' eine beliebige Zahl zwischen 0,8 und 1,5, v'' eine beliebige Zahl zwischen 3 und 4 und Y'' Wasserstoff oder Natrium bedeuten.

8. Verfahren nach Anspruch 3, dadurch gekennzeichnet, dass man die Substrate in oder mit einem wässerigen Bad behandelt, das eine oder mehrere der in den Ansprüchen 3 bis 7 definierten sulfonierten Zink- oder Aluminiumphthalocyaninverbindungen enthält, oder dass diese Verbindungen den Substraten, soweit sie aus Wasser bestehen oder solches enthalten, einverleibt und dass man die Substrate dabei mit eines künstlichen Lichtquelle, vorzugsweise eines Glühlampe oder Infrarotlampe, entweder im Behandlungsbad oder ausserhalb desselben bestrahlt oder dass die Bestrahlung der Substrate mit Sonnenlicht erfolgt, entweder direkt im Behandlungsbad oder im wäshalogenen substituiert sind, oder Mischungen von solchen Phthalocyaninverbindungen, behandelt. serigen Substrat oder nach Herausnahme aus dem Bad in feuchtem Zustand.

9. Verfahren nach Anspruch 8 zur Entkeimung von Waschgut, dadurch gekennzeichnet, dass man das Waschgut unter Bestrahlung mit infrarotem oder/und sichtbarem Licht in einer Waschflotte wäscht, die neben üblichen Waschmittelbestandteilen 0,001 bis 100 ppm eines oder mehrerer in den Ansprüchen 3 bis 7 definierter Phthalocyaninderivate und gegebenenfalls ein anorganisches Salz enthält.

10. Verfahren nach Anspruch 8 zur Entkeimung bzw. antimikrobiellen Ausrüstung von Textilien, dadurch gekennzeichnet, dass man letztere in einer Flotte, die 0,01 bis 50 ppm eines in den Ansprüchen 3 bis 7 definierten Zink- oder Aluminiumphthalocyaninderivates enthält, behandelt, wobei das Bad direkt mit einer künstlichen Lichtquelle bestrahlt wird bzw. die Textilien später in feuchtem Zustand mit einer künstlichen Lichtquelle bestrahlt oder dem Sonnenlicht ausgesetzt werden.

11. Verfahren nach Anspruch 2, dadurch gekennzeichnet, dass man die Behandlung der Textilien in einem wässerigen Bad vornimmt, das ein oder mehrere in den Ansprüchen 2 oder 4 bis 7 definierte sulfonierte Zink- oder Aluminiumphthalocyanine in einer Konzentration von 0,01 bis 50 mg/l enthält.

12. Verfahren nach Anspruch 11, dadurch gekennzeichnet, dass man die Bestrahlung mit einer künstlichen Lichtquelle, vorzugsweise einer Glühlampe oder Infrarotlampe, entweder im Behandlungsbad oder ausserhalb desselben vornimmt oder dass die Belichtung der bereits dem Behandlungsbad entnommenen noch feuchten oder wieder befeuchteten Textilien oder die Belichtung der eingeweichten bzw. gewaschenen Textilien im Sonnenlicht erfolgt.

13. Verfahren nach einem der Ansprüche 2, 11 oder 12 zum Waschen und Bleichen von Textilien, dadurch gekennzeichnet, dass man letztere in einer Flotte behandelt, die neben der (den) sulfonierten Zink- oder/und Aluminiumphthalocyaninverbindung(en) noch übliche Waschmittelbestandteile enthält.

14. Verfahren nach Anspruch 1 zum Entkeimen von Oberflächen, z.B. von Bädern, Wänden, Möbeln usw., dadurch gekennzeichnet, dass man auf die genannten Oberflächen eine wässerige Lösung aufbringt, die ein oder mehrere in den Ansprüchen 1 bis 7 definierte Phthalocyaninverbindungen enthält, und danach die noch feuchten Oberflächen dem Sonnenlicht aussetzt und sie gegebenenfalls zusätzlich mit einer infrarotes und/oder sichtbares Licht liefernden künstlichen Lichtquelle beleuchtet.

15. Verfahren nach Anspruch 1 zur Entkeimung des Wassers in Schwimmbädern, dadurch gekennzeichnet, dass man dem Wasser 0,001 bis 50, vorzugsweise 0,01 bis 10 ppm eines oder mehrerer in den Ansprüchen 1 bis 7 definierter Phthalocyaninderivate zusetzt, wobei das Wasser zusätzlich zum vorhandenen Sonnenlicht noch mit einer künstlichen Lichtquelle bestrahlt werden kann.

16. Verfahren nach Anspruch 1 zur Entkeimung von Effluenten aus Kläranlagen, dadurch gekennzeichnet, dass man dem Effluenten 0,001 bis 100, vorzugsweise 0,01 bis 10 ppm eines oder mehrerer in den Ansprüchen 1 bis 7 definierter Phthalocyaninderivate zusetzt, wobei zusätzlich zum vorhandenen Sonnenlicht noch eine Bestrahlung mit einer künstlichen Lichtquelle erfolgen kann.

17. Antimikrobiell wirksames Mittel und/oder Bleichmittel, enthaltend eine oder mehrere in den Ansprüchen 1 bis 7 definierte sulfonierte Zink- oder/und Aluminiumphthalocyaninverbindungen.

18. Mittel nach Anspruch 17, enthaltend, neben einer oder mehreren in den Ansprüchen 3 bis 7 definierten sulfonierten Zink- oder/und Aluminiumphthalocyaninverbindungen, ein oder mehrere anorganische Salze, z.B. NaCl oder $Na_2SO_4$ sowie gegebenenfalls Wasser.

19. Mittel nach Anspruch 18, enthaltend 50 bis 80% einer oder mehrerer in den Ansprüchen 4 bis 7 definierter Phthalocyaninverbindungen, vorzugsweise einer im Anspruch 7 definierten Phthalocyaninverbindung, 10 bis 30% NaCl und/oder $Na_2SO_4$ und 0 bis 30% Wasser.

20. Antimikrobiell wirksames Mittel nach Anspruch 17, enthaltend eine oder mehrere in den Ansprüchen 3 bis 7 definierte sulfonierte Zink- oder/und Aluminiumphthalocyaninverbindungen und gegebenenfalls übliche Waschmittelbestandteile.

21. Bleich-, Wasch- oder Einweichmittel nach Anspruch 17, enthaltend eine oder mehrere in den Ansprüchen 2 oder 4 bis 7 definierte sulfonierte Zink- oder/und Aluminiumphthalocyaninverbindungen und gegebenenfalls übliche Waschmittelbestandteile.

22. Waschmittel nach Anspruch 21, enthaltend eine oder mehrere in den Ansprüchen 2 oder 4 bis 7 definierte sulfonierte Zink- oder/und Aluminiumphthalocyaninverbindungen, vorzugsweise in einer Menge von 0,0005 bis 1,5 Gew.-%, bezogen auf das Gesamtmittel, ein oder mehrere organische Detergenzien, alkalische Gerüststoffsalze und gegebenenfalls weitere Bleichmittel.

23. Waschmittel nach Anspruch 21, enthaltend 10 bis 50% eines anionischen, nichtionischen semipolaren, ampholytischen oder/und zwitterionischen oberflächenaktiven Substanz, 0,005 bis 1% eines in den Ansprüchen 2 oder 4 bis 7, vorzugsweise im Anspruch 7, definierten sulfonierten Phthalocyanins, 0 bis 80% eines alkalischen Gerüststoffsalzes, beispielsweise 10 bis 60% eines alkalischen Gerüststoffsalzes aus der Gruppe der wasserlöslichen Alkalimetallcarbonate, -borate, -phosphate, -polyphosphate, -bicarbonate und -silicate, der wasserlöslichen Aminopolycarboxylate, Phytate, Polyphosphonate und -carboxylate, sowie der wasserlöslichen Aluminiumsilicate, und gegebenenfalls weitere übliche Waschmittelbestandteile.

24. Waschmittel nach Anspruch 23, worin als oberflächenaktive Substanz wasserlösliche Alkylbenzolsulfonate, Alkylsulfate, äthoxylierte Alkyläthersulfate, Paraffinsulfonate, α-Olefinsulfonate, α-Sulfocarbonsäuren, deren Salze und Ester, Alkylglyceryläthersulfonate, Fettsäuremonoglyceridsulfate oder -sulfonate, Alkylphenopolyäthoxyäthersulfate, 2-Acyloxyalkansulfonate, β-Alkyloxyalkansulfonate, Seifen, äthoxylierte Fettalkohole, Alkylphenole, Polypropoxyglykole, Polypropoxyäthylendiamine, Aminoxide, Phosphinoxide, Sulfoxide, aliphatische sekundäre une tertiäre Amine, aliphatische quaternäre Ammonium-, Phosphonium- und Sulfoniumverbindungen oder Mischungen der genannten Substanzen eingesetzt werden.

25. Verfahren zur Herstellung von Zink- oder Aluminiumphthalocyaninverbindungen der Formel

$$(MePC)\begin{cases} R_x \\ (SO_3Y)_v \end{cases} \qquad (1)$$

worin MePC für das Zink- oder Aluminiumphthalocyaninringsystem steht, Y Wasserstoff, ein Alakalimetall-, Ammonium- oder Aminsalzion, v eine beliebige Zahl zwischen 0,1 und 4, R Fluor, Chlor, Brom, Jod oder Cyano und x eine beliebige Zahl zwischen 0,1 und 8 bedeuten, wobei die im Molekül vorhandenen R gleich oder verschieden sein können, dadurch gekennzeichnet, dass man ein Phthalocyanin der Formel $(MePC)-R_x$ mit Chlorsulfonsäure umsetzt und das erhaltene Sulfochlorid hydrolysiert.

26. Verfahren nach Anspruch 25 zur Herstellung von Phthalocyaninverbindungen der Formel

$$(MePC)\begin{cases} R'_{x'} \\ (SO_3Y')_{v'} \end{cases} \qquad (2)$$

worin MePC für das Zink- oder Aluminiumphthalocyaninringsystem, vorzugsweise für das Aluminiumphthalocyaninringsystem steht, Y' Wasserstoff, ein Alkalimetall- oder Ammoniumion, v' eine beliebige Zahl zwischen 1,3 und 4, vorzugsweise zwischen 3 und 4, R' Chlor, Brom oder Jod und x' eine beliebige Zahl zwischen 0,5 und 8, vorzugsweise zwischen 0,8 und 4, bedeuten, vorzugsweise von solchen, worin Y' für Wasserstoff, Natrium oder Kalium, v' eine Zahl zwischen 2 und 4, vorzugsweise zwischen 3 und 4, R' Chlor und Brom, vorzugsweise Chlor, und x' eine beliebige Zahl zwischen 0,8 und 2 bedeuten, dadurch gekennzeichnet, dass man ein Phthalocyanin der Formel $(MePC)-R'_{x'}$ mit Chlorsulfonsäure umsetzt und das erhaltene Sulfochlorid hydrolysiert.

27. Verfahren nach einem der beiden Ansprüche 25 oder 26 zur Herstellung von Phthalocyaninverbindungen einer der Formeln (1) oder (2), worin MePC für das Aluminiumphthalocyaninringsystem steht, insbesondere von Phthalocyaninverbindungen der Formel

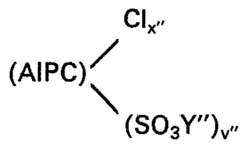

worin AlPC für das Aluminiumphthalocyaninringsystem steht, x″ eine beliebige Zahl zwischen 0,8 und 1,5, v″ eine beliebige Zahl zwischen 3 und 4 und Y″ Wasserstoff oder Natrium bedeuten, dadurch gekennzeichnet, dass man eine Verbindung der Formel

$$(AlPC-R_x, (AlPC)-R'_{x'} \text{ oder } (AlPC)-Cl_{x''}$$

mit Chlorsulfonsäure umsetzt und das erhaltene Sulfochlorid hydrolysiert.

28. Verfahren zur Herstellung von Phthalocyaninverbindungen der Formel

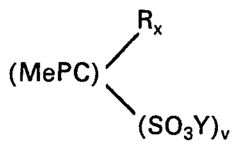

(1)

worin MePC für das Zink- oder Aluminiumphthalocyaninringsystem steht, Y Wasserstoff, ein Alkalimetall-, Ammonium- oder Aminsalzion, v eine beliebige Zahl zwischen 0,1 und 4, R Fluor, Chlor, Brom, Jod oder Cyano und x eine beliebige Zahl zwischen 0,1 und 8 bedeuten, wobei die im Molekül vorhandenen R gleich oder verschieden sein können, dadurch gekennzeichnet, dass man ein Phthalocyanin der Formel

$$(MePC)-R_x$$

sulfoniert, vorzugsweise mit Oleum, und gegebenenfalls die erhaltene Sulfonsäure in ein Salz überführt.

29. Verfahren zur Herstellung von Phthalocyaninverbindungen der Formel

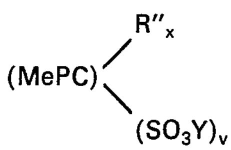

worin MePC für das Zink- oder Aluminiumphthalocyaninringsystem steht, Y Wasserstoff, ein Alkalimetall-, Ammonium- oder Aminsalzion, v eine beliebige Zahl zwischen 0,1 und 4, R″ Chlor, Brom oder Jod und x eine beliebige Zahl zwischen 0,1 und 8 bedeuten, dadurch gekennzeichnet, dass man ein sulfoniertes Phthalocyanin der Formel

$$(MePC)-(SO_3Y)_v$$

chloriert, bromiert oder jodiert.

30. Verfahren zur Herstellung von Phthalocyaninverbindungen der Formel

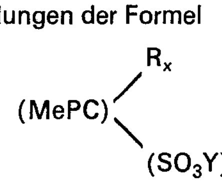

(1)

worin MePC für das Zink- oder Aluminiumphthalocyaninringsystem steht, Y Wasserstoff, ein Alkalimetall-, Ammonium- oder Aminsalzion, v eine beliebige Zahl zwischen 0,1 und 4, R Fluor, Chlor, Brom, Jod oder Cyano und x eine beliebige Zahl zwischen 0,1 und 8 bedeuten, wobei die im Molekül vorhandenen R gleich oder verschieden sein können, dadurch gekennzeichnet, dass man ein Phthalocyanin der Formel

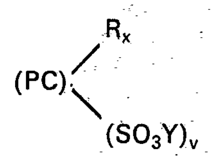

worin PC für das metallfreie Phthalocyaninringsystem steht und R, x, Y und v wie oben definiert sind, mit einem Zink- oder Aluminiumsalz oder -alkoholat umsetzt.

**Revendications** pour les Etats contractants: BE, CH, DE, FR, IT, LI, LU, NL, SE

1. Procédé pour blanchir ou enlever les taches des matières textiles et pour combattre les micro-organismes dans ou sur des substrats organiques ou minéraux, ou bien pour protéger ceux-ci de l'attaque des micro-organismes, en traitant les matières textiles ou les substrats à débarrasser ou à protéger des micro-organismes avec des phtalocyanines de zinc ou d'aluminium solubles dans l'eau en présence d'eau et tout en les irradiant avec de la lumière, caractérisé par le fait qu'on utilise comme phtalocyanines de zinc ou d'aluminium solubles dans l'eau des phtalocyanines de zinc ou d'aluminium sulfonées qui sont substituées en plus par des groupes neutres non aquasolibilisants, par exemple par des atomes d'halogène ou des pseudo-halogènes, ou bien avec des mélanges de ces phtalocyanines.

2. Procédé selon la revendication 1, pour blanchir ou enlever les taches des matières textiles, caractérisé par le fait qu'on traite ces matières, en présence d'eau et tout en les irradiant avec de la lumière, avec des phtalocyanines de zinc ou d'aluminium sulfonées qui sont substituées en plus par des groupes neutres non aquasolubilisants, par exemple par des atomes d'halogène ou pseudo-halogènes ou avec des mélanges de ces composés de phtalocyanines.

3. Procédé selon la revendication 1, pour combattre les micro-organismes dans ou sur des substrats organiques ou minéraux, ou bien pour protéger ceux-ci contre l'attaque des micro-organismes, caractérisé par le fait qu'on traite les substrats en question, en présence d'eau et tout en les irradiant par la lumière, avec des phtalocyanines de zinc ou d'aluminium sulfonées qui sont substituées en plus par des groupes neutres non aquasolubilisants, par exemple par des atomes d'halogène ou des pseudo-halogènes, ou avec des mélanges de ces composés de phtalocyanines.

4. Procédé selon l'une des revendications 1 à 3, caractérisé par le fait qu'on utilise comme phtalocyanines de zinc ou d'aluminium celles ayant la formule:

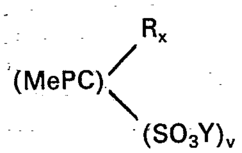 (1)

dans laquelle MePC représente le système cyclique phtalocyanines de zinc ou d'aluminium, Y est de l'hydrogène, un ion de métal alcalin, ammonium ou de sel d'amine, v est un nombre quelconque entre 1 et 4, R est le fluor, le chlore, le brome, l'iode ou un groupe cyano, et x est un nombre quelconque entre 0,1 et 8, les symboles R présents dans la molécule pouvant être identiques ou différents.

5. Procédé selon la revendication 4, caractérisé par le fait qu'on utilise comme phtalocyanines de zinc ou d'aluminium celles ayant la formule:

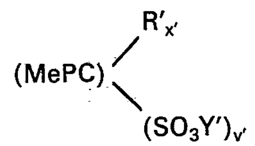 (2)

dans laquelle MePC représente le système cyclique phtalocyanines de zinc ou d'aluminium, de préférence le système cyclique phtalocyanine d'aluminium, Y' est de l'hydrogène, un ion de métal alcalin ou un ion ammonium, v' est un nombre quelconque entre 1,3 et 4, de préférence entre 3 et 4, R' est le chlore, le brome ou l'iode, et x' est un nombre quelconque entre 0,5 et 8, de préférence entre 0,8 et 4.

6. Procédé selon la revendication 5, caractérisé par le fait qu'on utilise une phtalocyanine de zinc ou d'aluminium de formule (2) dans laquelle Y' est de l'hydrogène, du sodium ou du potassium, v' est un nombre entre 2 et 4, de préférence entre 3 et 4, R' est le chlore ou le brome, de préférence le chlore, et x' est un nombre quelconque entre 0,8 et 2.

7. Procédé selon l'une des revendications 4 à 6, caractérisé par le fait qu'on utilise une phtalocyanine de formule (1) ou (2) dans laquelle MePC représente le système cyclique phtalocyanine d'aluminium, de préférence un de ceux ayant la formule:

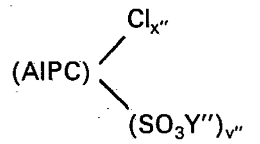

dans laquelle AlPC est le système cyclique phtalocyanine d'aluminium, x'' est un nombre entier entre 0,8 et 1,5, v'' est un nombre entier entre 3 et 4, et Y'' est de l'hydrogène ou du sodium.

8. Procédé selon la revendication 3, caractérisé par le fait qu'on traite les substrats dans ou avec un bain aqueux qui contient un ou plusieurs des composés de phtalocyanines de zinc ou d'aluminium sulfonés définis dans les revendications 3 à 7, ou bien qu'on incorpore ces composés aux substrats dans la mesure où ils sont constitués par de l'eau ou contiennent celle-ci, et qu'en outre on irradie les substrats avec une source lumineuse artificielle, de préférence une lampe à incandescence ou une lampe infrarouge, soit dans le bain de traitement, soit à l'extérieur de celui-ci, ou bien qu'on effectue l'irradiation des substrats avec la lumière solaire soit directement dans le bain de traitement ou dans le substrat aqueux, soit après l'avoir enlevé du bain à l'état humide.

9. Procédé selon la revendication 8 pour désinfecter des articles à laver, caractérisé par le fait qu'on lave l'article à laver tout en irradiant avec une lumière infrarouge ou/et une lumière visible dans un bain de lavage qui contient, en plus des constituants d'agents de lavage usuels, 0,001 à 100 ppm d'un ou de plusieurs des dérivés de phtalocyanines définis dans les revendications 3 à 7, et éventuellement un sel minéral.

10. Procédé selon la revendication 8 pour désinfecter des matières textiles ou pour leur appliquer un apprêt antimicrobien, caractérisé par le fait qu'on traite ces matières textiles dans un bain qui contient 0,01 à 50 ppm de l'un des dérivés de phtalocyanines de zinc ou d'aluminium définis dans les revendications 3 à 7, le bain étant irradié directement avec une source lumineuse artificielle ou bien les matières textiles étant irradiées ultérieurement à l'état humide avec une source lumineuse artificielle ou bien étant exposées à la lumière solaire.

11. Procédé selon la revendication 2, caractérisé par le fait qu'on effectue le traitement des matières textiles dans un bain aqueux qui contient une ou plusiers des phtalocyanines de zinc ou d'aluminiun sulfonées définies dans les revendications 2 ou 4 à 7 en une concentration de 0,01 à 50 mg/l.

12. Procédé selon la revendication 11, caractérisé par le fait qu'on effectue l'irradiation avec une source lumineuse artificielle, de préférence une lampe à incandescence ou lampe infrarouge, soit dans le bain de traitement, soit à l'extérieur de celui-ci, ou bien qu'on effectue l'irradiation des matières textiles déjà sorties du bain de traitement, encore humides ou humidifiées de nouveau, ou bien qu'on effectue l'irradiation des matières textiles trempées ou lavées par la lumière solaire.

13. Procédé selon l'une des revendications 2, 11 ou 12 pour laver et blanchir des matières textiles, caractérisé par le fait qu'on traite ces dernières dans un bain qui contient, en plus du ou des composés de phtalocyanines de zinc ou/et d'aluminium sulfonés, d'autres constituants d'agents de blanchiment usuels.

14. Procédé selon la revendication 1 pour désinfecter des surfaces, par exemple des sols, des murs, des meubles, etc., caractérisé par le fait qu'on applique sur les surfaces en question une solution aqueuse qui contient un ou plusieurs des composés de phtalocyanines définis dans les revendications 1 à 7, puis qu'on expose les surfaces encore humides à la lumière solaire et qu'on les irradie éventuellement en plus avec une source lumineuse artificielle fournissant une lumière infrarouge et/ou la lumière visible.

15. Procédé selon la revendication 1 pour stériliser de l'eau dans les bains de natation, caractérisé par le fait qu'on ajoute à l'eau 0,001 à

50, de préférence 0,01 à 10 ppm d'un ou de plusieurs dérivés de phtalocyanines définis dans les revendications 1 à 7, l'eau pouvant être irradiée, en plus de la lumière solaire existante, avec une source lumineuse artificielle.

16. Procédé selon la revendication 1 pour stériliser des effluents provenant d'installations de clarification, caractérisé par le fait qu'on ajoute aux effluents 0,001 à 100, de préférence 0,01 à 10 ppm d'un ou de plusieurs dérivés de phtalocyanines définis dans les revendications 1 à 7, une irradiation supplémentaire à celle de la lumière solaire présente pouvant être encore effectuée avec une source lumineuse artificielle.

17. Agent à activité antimicrobienne et/ou agent de blanchiment contenant un ou plusieurs composés de phtalocyanines de zinc ou/et d'aluminium sulfonés définis dans les revendications 1 à 7.

18. Agent selon la revendication 17, contenant, en plus, un ou plusieurs composés de phtalocyanines de zinc ou/et d'aluminium sulfonés définis dans les revendications 3 à 7, un ou plusieurs sels minéraux, par exemple NaCl ou $Na_2SO_4$ et éventuellement de l'eau.

19. Agent selon la revendication 18, contenant 50 à 80% d'un ou de plusieurs composés de phtalocyanines définis dans les revendications 4 à 7, de préférence d'un composé de phtalocyanine défini dans la revendication 7, 10 à 30% de NaCl et/ou $Na_2SO_4$ et 0 à 30 % d'eau.

20. Agent à activité antimicrobienne selon la revendication 17, contenant un ou plusieurs composés de phtalocyanines de zinc ou/et d'aluminium sulfonés définis dans les revendications 3 à 7, et éventuellement des constituants d'agents de lavage usuels.

21. Agent de blanchiment, agent de lavage ou agent de trempage selon la revendication 17, contenant un ou plusiers composés de phtalocyanines de zinc ou/et d'aluminium sulfonés définis dans les revendications 2 ou 4 à 7, et éventuellement des constituants d'agents de lavage usuels.

22. Agent de lavage selon la revendication 21, contenant un ou plusieurs composés de phtalocyanines de zinc ou/et d'aluminium sulfonés définis dans les revendications 2 ou 4 à 7, de préférence à raison de 0,0005 à 1,5 % en poids par rapport au poids global de l'agent, un ou plusieurs détergents organiques, des sels alcalins adjuvants actifs et éventuellement d'autres agents de blanchiment.

23. Agent de lavage selon la revendication 21, contenant 10 à 50 % d'une substance tensioactive anionique, non ionique, semi-polaire, ampholytique ou/et amphotère, 0,005 à 1 % d'une phtalocyanine sulfonée définie dans les revendications 2 ou 4 à 7, de préférence dans la revendication 7, 0 à 80 % d'un sel alcalin adjuvant actif, par exemple 10 à 60 % d'un sel alcalin adjuvant actif appartenant au groupe soluble dans l'eau des carbonates, borates, phosphates, polyphosphates, bicarbonates et silicates de métaux alcalins, aux aminopolycarboxylates, phytates, polyphosphonates et polycarboxylates solubles dans l'eau, ainsi qu'aux silicates d'aluminium insolubles dans l'eau, et éventuellement d'autres constituants d'agents de lavage usuels.

24. Agent de lavage selon la revendication 23, dans lequel sont utilisés, comme substances tensio-actives, les produits solubles dans l'eau tels que les alkylbenzènesulfonates, les alkylsulfates, les alkyléthersulfates oxyéthylés, les paraffinesulfonates, les α-oléfinesulfonates, les acides α-sulfocarboxyliques, leurs sels et leurs esters, les alkylglycéryléthersulfonates, les monoglycéridesulfates ou sulfonates d'acides gras, les alkylphénolpolyéthoxyéthersulfates, les 2-acyloxyalcanesulfonates, les β-alkyloxyalcanesulfonates, les savons, les alcools gras oxyéthylés, les alkylphénols, les polypropoxyglycols, les polypropoxyéthylènediamines, les oxydes d'amines, les oxydes de phosphines, les sulfoxydes, les amines aliphatiques secondaires et tertiaires, les composés d'ammonium, de phosponium et de sulfonium quaternaires aliphatiques ou des mélanges des substances mentionnées.

25. Composés de phtalocyanines de zinc ou d'aluminium ayant la formule:

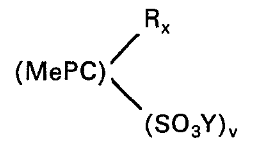

(1)

dans laquelle MePC représente le système cyclique phtalocyanines de zinc ou d'aluminium, Y est de l'hydrogène, un ion de métal alcalin, ammonium ou de sel d'amine, v est un nombre quelconque entre 0,1 et 4, R est le fluor, le chlore, le brome ou un groupe cyano, et x est un nombre quelconque entre 0,1 et 8, les symboles R existant dans la molécule pouvant être identiques ou différents.

26. Composés de phtalocyanine selon la revendication 25 ayant la formule:

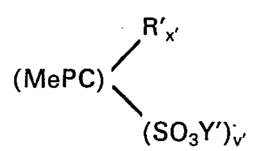

(2)

dans laquelle MePC représente le système cyclique phtalocyanine de zinc ou d'aluminium, de préférence le système cyclique phtalocyanine aluminium, Y' est de l'hydrogène, un ion de métal alcalin ou d'ammonium, v' un nombre quelconque entre 1,3 et 4, de préférence entre 3 et 4, R' est le chlore, le brome ou l'iode, et x' est un nombre quelconque entre 0,5 et 8, de préférence entre 0,8 et 4, de préférence ceux dans lesquels Y' est de l'hydrogène, du sodium ou du potassium, v' est un nombre entre 2 et 4, de préférence entre 3 et 4, R' est le chlore ou le brome, de préférence le chlore, et x' est un nombre quelconque entre 0,8 et 2.

27. Composé de phtalocyanines selon l'une des revendications 25 ou 26, de formule (1) ou (2), formules dans lesquelles MePC est le système cyclique phtalocyanines aluminium, de préférence celui ayant la formule:

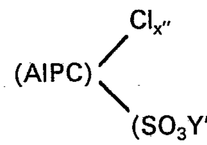

dans laquelle AlPC est le système cyclique phtalocyanine d'aluminium, x'' est un nombre quelconque entre 0,8 et 1,5, v'' est un nombre quelconque entre 3 et 4, et Y'' est de l'hydrogène ou du sodium.

28. Procédé pour préparer des composés de phtalocyanines de formule:

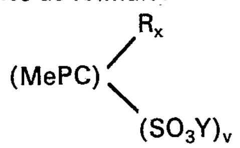 (1)

dans laquelle MePC représente le système cyclique phtalocyanines de zinc ou d'aluminium, Y est de l'hydrogène, un ion de métal alcalin, ammonium ou de sel d'amine, v est un nombre quelconque entre 0,1 et 4, R est le fluor, le chlore, le brome, l'iode ou un groupe cyano, et x un nombre quelconque entre 0,1 et 8, les symboles R existant dans la molécule pouvant être identiques ou différents, caractérisé par le fait qu'on sulfone une phtalocyanine de formule:

$$(MePC)-R_x$$

de préférence avec l'oléum et qu'on transforme éventuellement l'acide sulfonique obtenu en un sel.

29. Procédé selon la revendication 28 pour préparer des composés de phtocyanines de formule (1), caractérisé par le fait qu'on fait réagir une phtalocyanine de formule:

$$(MePC)-R_x$$

avec la chlorhydrine sulfurique et qu'on hydrolyse le sulfochlorure obtenu.

30. Procédé pour préparer des composés de phtalocyanines de formule:

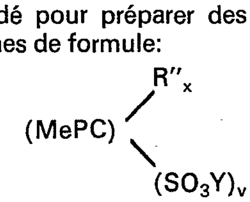

dans laquelle MePC représente le système cyclique phtalocyanines de zinc ou d'aluminium, Y est de l'hydrogène, un ion de métal alcalin ammonium ou de sel d'amine, v est un nombre quelconque entre 0,1 et 4, R'' est le chlore, le brome ou l'iode, et x est un nombre quelconque entre 0,1 et 8, caractérisé par le fait qu'on chlore, qu'on brome ou qu'on iode une phtalocyanine sulfonée de formule:

$$(MePC)-(SO_3Y)_v$$

31. Procédé pour préparer les composés de phtalocyanines de formule:

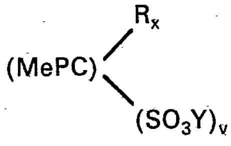 (1)

dans laquelle MePC représente le système cyclique phtalocyanine de zinc ou d'aluminium, Y est de l'hydrogène, un ion de métal alcalin, ammonium ou de sel d'amine, v est un nombre quelconque entre 0,1 et 4, R est le fluor, le chlore, le brome, l'iode ou un groupe cyano, et x est un nombre quelconque entre 0,1 et 8, les symboles R présents dans la molécule pouvant être identiques ou différents, caractérisé par le fait qu'on fait réagir une phtalocyanine de formule:

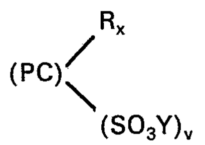

dans laquelle PC représente le système cyclique phtalocyanine non métallifère, et R, x, Y et v sont tels que définis ci-dessus, avec un sel ou un alcoolate de zinc ou d'aluminium.

32. Une phtalocyanine de zinc ou d'aluminium sulfonée pouvant être préparée selon l'une des revendications 28 à 31, dont le système cyclique phtalocyanine est substitué par $R_x$ ou $R''_x$ x, R ou R'' ayant les définitions données dans les revendications 28 à 31.

**Revendications** pour l'Etat contractant: AT

1. Procédé pour blanchir ou enlever les taches des matières textiles et pour combattre les micro-organismes dans ou sur des substrats organiques ou minéraux, ou bien pour protéger ceux-ci de l'attaque des micro-organismes, en traitant les matières textiles ou les substrats à débarrasser ou à protéger des micro-organismes avec des phtalocyanines de zinc ou d'aluminium solubles dans l'eau en présence d'eau et tout en les irradiant avec de la lumière, caractérisé par le fait qu'on utilise comme phtalocyanines de zinc ou d'aluminium solubles dans l'eau des phtalocyanines de zinc ou d'aluminium sulfonées qui sont substituées en plus par des groupes neutres non aquasolubilisants, par exemple par des atomes d'halogène ou des pseudo-halogènes, ou bien avec des mélanges de ces phtalocyanines.

2. Procédé selon la revendication 1, pour blanchir ou enlever les taches des matières textiles, caractérisé par le fait qu'on traite ces matières, en présence d'eau et tout en les irradiant avec de la lumière, avec des phtalocyanines de zinc ou d'aluminium sulfonées qui sont substituées en plus par des groupes neutres non aquasolubilisants, par exemple par des atomes d'halogène ou pseudo-halogènes ou avec des mélanges de ces composés de phtalocyanines.

3. Procédé selon la revendication 1, pour combattre les micro-organismes dans ou sur des substrats organiques ou minéraux ou bien pour protéger ceux-ci contre l'attaque des micro-organismes, caractérisé par le fait qu'on traite les substrats en question, en présence d'eau et tout en les irradiant par la lumière, avec des phtalocyanines de zinc ou d'aluminium sulfonées qui sont

substituées en plus par des groupes neutres non aquasolubilisants, par exemple par des atomes d'halogène ou des pseudo-halogènes, ou avec des mélanges de ces composés de phtalocyanines.

4. Procédé selon l'une des revendications 1 à 3, caractérisé par le fait qu'on utilise comme phtalocyanines de zinc ou d'aluminium celles ayant la formule:

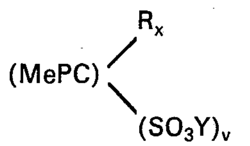
(1)

dans laquelle MePC représente le système cyclique phtalocyanines de zinc ou d'aluminium, Y est de l'hydrogène, un ion de métal alcalin, ammonium ou de sel d'amine, v est un nombre quelconque entre 1 et 4, R est le fluor, le chlore, le brome, l'iode ou un groupe cyano, et x est un nombre quelconque entre 0,1 et 8, les symboles R présents dans la molécule pouvant être identiques ou différents.

5. Procédé selon la revendication 4, caractérisé par le fait qu'on utilise comme phtalocyanines de zinc ou d'aluminium celles ayant la formule:

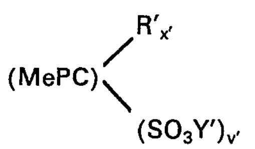
(2)

dans laquelle MePC représente le système cyclique phtalocyanines de zinc ou d'aluminium, de préférence le système cyclique phtalocyanine d'aluminium, Y' est de l'hydrogène, un ion de métal alcalin ou un ion ammonium, v' est un nombre quelconque entre 1,3 et 4, de préférence entre 3 et 4, R' est le chlore. le brome ou l'iode, et x' est un nombre quelconque entre 0,5 et 8, de préférence entre 0,8 et 4.

6. Procédé selon la revendication 5, caractérisé par le fait qu'on utilise une phtalocyanine de zinc ou d'aluminium de formule (2) dans laquelle Y' est de l'hydrogène, du sodium ou du potassium, v' est un nombre entre 2 et 4, de préférence entre 3 et 4, R' est le chlore ou le brome, de préférence le chlore, et x' est un nombre quelconque entre 0,8 et 2.

7. Procédé selon l'une quelconque des revendications 4 à 6, caractérisé par le fait qu'on utilise une phtalocyanine de formule (1) ou (2) dans laquelle MePC représente le système cyclique phtalocyanine d'aluminium, de préférence un de ceux ayant la formule:

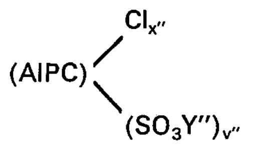

dans laquelle AlPC est le système cyclique phtalocyanine d'aluminium, x'' est un nombre entier entre 0,8 et 1,5, v'' est un nombre entier entre 3 et 4, et Y'' est de l'hydrogène ou du sodium.

8. Procédé selon la revendication 3, caractérisé par le fait qu'on traite les substrats dans ou avec un bain aqueux qui contient un ou plusieurs des composés de phtalocyanines de zinc ou d'aluminium sulfonés définis dans les revendications 3 à 7, ou bien qu'on incorpore ces composés aux substrats dans la mesure où ils sont constitués par de l'eau ou contiennent celle-ci, et qu'en outre on irradie les substrats avec une source lumineuse artificielle, de préférence une lampe à incandescence ou une lampe infrarouge, soit dans le bain de traitement, soit à l'extérieur de celui-ci, ou bien qu'on effectue l'irradiation des substrats avec la lumière solaire soit directement dans le bain de traitement ou dans le substrat aqueux, soit après l'avoir enlevé du bain à l'état humide.

9. Procédé selon la revendication 8 pour désinfecter des articles à laver, caractérisé par le fait qu'on lave l'article à laver tout en irradiant avec une lumière infrarouge ou/et une lumière visible dans un bain de lavage qui contient, en plus des constituants d'agents de lavage usuels, 0,001 à 100 ppm d'un ou de plusieurs des dérivés de phtalocyanines définis dans les revendications 3 à 7, et éventuellement un sel minéral.

10. Procédé selon la revendication 8 pour désinfecter des matières textiles ou pour leur appliquer un apprêt antimicrobien, caractérisé par le fait qu'on traite ces matières textiles dans un bain qui contient 0,01 à 50 ppm de l'un des dérivés de phtalocyanines de zinc ou d'aluminium définis dans les revendications 3 à 7, le bain étant irradié directement avec une source lumineuse artificielle ou bien les matières textiles étant irradiées ultérieurement à l'état humide avec une source lumineuse artificielle ou bien étant exposées à la lumière solaire.

11. Procédé selon la revendication 2, caractérisé par le fait qu'on effectue le traitement des matières textiles dans un bain aqueux qui contient une ou plusieurs des phtalocyanines de zinc ou d'aluminium sulfonées définies dans les revendications 2 ou 4 à 7 en une concentration de 0,01 à 50 mg/l.

12. Procédé selon la revendication 11, caractérisé par le fait qu'on effectue l'irradiation avec une source lumineuse artificielle, de préférence une lampe à incandescence ou lampe infrarouge, soit dans le bain de traitement, soit à l'extérieur de celui-ci, ou bien qu'on effectue l'irradiation des matières textiles déjà sorties du bain de traitement, encore humides ou humidifiées de nouveau, ou bien qu'on effectue l'irradiation des matières textiles trempées ou lavées par la lumière solaire.

13. Procédé selon l'une des revendications 2, 11 ou 12 pour laver et blanchir des matières textiles, caractérisé par le fait qu'on traite ces dernières dans un bain qui contient, en plus du ou des composés de phtalocyanines de zinc ou/et d'aluminium sulfonés, d'autres constituants d'agents de blanchiment usuels.

14. Procédé selon la revendication 1, pour désinfecter des surfaces, par exemple des sols, des murs, des meubles, etc., caractérisé par le fait qu'on applique sur les surfaces en question une solution aqueuse qui contient un ou plusieurs des composés de phtalocyanines définis dans les revendications 1 à 7, puis qu'on expose les

surfaces encore humides à la lumière solaire et qu'on les irradie éventuellement en plus avec une source lumineuse artificielle fournissant une lumière infrarouge et/ou la lumière visible.

15. Procédé selon la revendication 1 pour stériliser de l'eau dans les bains de natation, caractérisé par le fait qu'on ajoute à l'eau 0,001 à 50 de préférence 0,01 à 10 ppm d'un ou de plusieurs dérivés de phtalocyanines définis dans les revendications 1 à 7, l'eau pouvant être irradiée, en plus de la lumière solaire existante, avec une source lumineuse artificielle.

16. Procédé selon la revendication 1 pour stériliser des effluents provenant d'installations de clarification, caractérisé par le fait qu'on ajoute aux effluents 0,001 à 100, de préférence 0,01 à 10 ppm d'un ou de plusieurs dérivés de phtalocyanines définis dans les revendications 1 à 7, une irradiation supplémentaire à celle de la lumière solaire présente pouvant être encore effectuée avec une source lumineuse artificielle.

17. Agent à activité antimicrobienne et/ou agent de blanchiment contenant un ou plusieurs composés de phtalocyanines de zinc ou/et d'aluminium sulfonés définis dans les revendications 1 à 7.

18. Agent selon la revendication 17, contenant, en plus d'un ou de plusieurs composés de phtalocyanines de zinc ou/et d'aluminium sulfonés définis dans les revendications 3 à 7, un ou plusieurs sels minéraux, par exemple NaCl ou $Na_2SO_4$ et éventuellement de l'eau.

19. Agent selon la revendication 18, contenant 50 à 80 % d'un ou de plusieurs composés de phtalocyanines définis dans les revendications 4 à 7, de préférence d'un composé de phtalocyanine défini dans la revendication 7, 10 à 30 % de NaCl et/ou $Na_2SO_4$, et 0 à 30 % d'eau.

20. Agent à activité antimicrobienne selon la revendication 17, contenant un ou plusieurs composés de phtalocyanines de zinc ou/et d'aluminium sulfonés définis dans les revendications 3 à 7, et éventuellement des constituants d'agents de lavage usuels.

21. Agent de blanchiment, agent de lavage ou agent de trempage selon la revendication 17, contenant un ou plusieurs composés de phtalocyanines de zinc ou/et d'aluminium sulfonés définis dans les revendications 2 ou 4 à 7, et éventuellement des constituants d'agents de lavage usuels.

22. Agent de lavage selon la revendication 21, contenant un ou plusieurs composés de phtalocyanines de zinc ou/et d'aluminium sulfonés définis dans les revendications 2 ou 4 à 7, de préférence à raison de 0,0005 à 1,5 % en poids par rapport au poids global de l'agent, un ou plusieurs détergents organiques, des sels alcalins adjuvants actifs et éventuellement d'autres agents de blanchiment.

23. Agent de lavage selon la revendication 21, contenant 10 à 50 % d'une substance tensioactive anionique, non ionique, semi-polaire, ampholytique ou/et amphotère, 0,005 à 1 % d'une phtalocyanine sulfonée définie dans les revendications 2 ou 4 à 7, de préférence dans la revendication 7, 0 à 80 % d'un sel alcalin adjuvant actif, par exemple 10 à 60% d'un sel alcalin adjuvant actif appartenant au groupe soluble dans l'eau des carbonates, borates, phosphates, polyphosphates, bicarbonates et silicates de métaux alcalins, aux aminopolycarboxylates, phytates, polyphosphonates et polycarboxylates solubles dans l'eau, ainsi qu'aux silicates d'aluminium insolubles dans l'eau, et éventuellement d'autres constituants d'agents de lavage usuels.

24. Agent de lavage selon la revendication 23, dans lequel sont utilisés comme substances tensio-actives les produits solubles dans l'eau tels que les alkylbenzènesulfonates, les alkylsulfates, les alkyléthersulfates oxyéthylés, les paraffinesulfonates, les α-oléfinesulfonates, les acides α-sulfocarboxyliques, leurs sels et leurs esters, les alkylglycéryléthersulfonates, les monoglycéridesulfates ou sulfonates d'acides gras, les alkylphénolpolyéthoxyéthersulfates, les 2-acyloxyalcanesulfonates, les β-alkyloxyalcanesulfonates, les savons, les alcools gras oxyéthylés, les alkylphénols, les polypropoxyglycols, les polypropoxyéthylènediamines, les oxydes d'amines, les oxydes de phosphines, les sulfoxydes, les amines aliphatiques secondaires et tertiaires, les composés d'ammonium, de phosphonium et de sulfonium quaternaires aliphatiques ou des mélanges des substances mentionnées.

25. Procédé pour préparer les composés de phtalocyanines de zinc ou d'aluminium de formule:

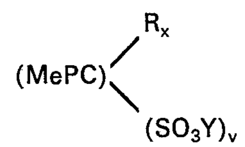

(1)

dans laquelle MePC représente le système cyclique phtalocianine de zinc ou d'aluminium, Y est de l'hydrogène, un ion de métal alcalin, ammonium ou de sel d'amine, v est un nombre quelconque entre 0,1 et 4, R est le fluor, le chlore, le brome, ou un groupe cyano, et x est un nombre quelconque entre 0,1 et 8, les symboles R présents dans la molécule pouvant être identiques ou différents, caractérisé par le fait qu'on fait réagir une phtalocyanine de formule $(MePC)-R_x$ avec la chlorhydrine sulfurique et qu'on hydrolyse le sulfochlorure obtenu.

26. Procédé selon la revendication 25 pour préparer des composés de phtalocyanines de formule:

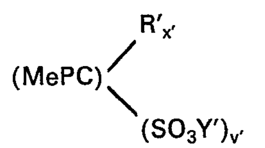

(2)

dans laquelle MePC représente le système cyclique phtalocyanine de zinc ou d'aluminium, de préférence le système cyclique phtalocyanine d'aluminium, Y' est de l'hydrogène, un ion de métal alcalin ou un ion ammonium, v' est un nombre quelconque entre 1,3 et 4, de préférence entre 3 et 4, R' est le chlore, le brome ou l'iode, et x' est un nombre quelconque entre 0,5 et 8, de

préférence entre 0,8 et 4, de préférence ceux dans lesquels Y' est de l'hydrogène, du sodium ou du potassium, v' est un nombre entre 2 et 4, de préférence entre 3 et 4, R' est le chlore ou le brome, de préférence le chlore, et x' est un nombre quelconque entre 0,8 et 2, caractérisé par le fait qu'on fait réagir une phtalocyanine de formule $(MePC)-R'_{x'}$ avec la chlorhydrine sulfurique, puis qu'on hydrolyse le sulfochlorure obtenu.

27. Procédé selon l'une des revendications 25 ou 26 pour préparer des composés de phtalocyanines de formule (1) ou (2), formules dans lesquelles MePC représente le système cyclique phtalocyanine d'aluminium, en particulier des composés de phtalocyanines de formule:

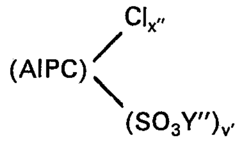

dans laquelle AlPC représente le système cyclique phtalocyanine d'aluminium, x'' est un nombre quelconque entre 0,8 et 1,5, v'' est un nombre quelconque entre 3 et 4, et Y'' est de l'hydrogène ou du sodium, caractérisé par le fait qu'on fait réagir un composé ayant l'une des formules:

$$(AlPC)-R_{x'}, (AlPC)-R'_{x'} \text{ ou } (AlPC)-Cl_{x''}$$

avec la chlorhydrine sulfurique et qu'on hydrolyse le sulfochlorure obtenu.

28. Procédé pour préparer des composés de phtalocyanines de formule:

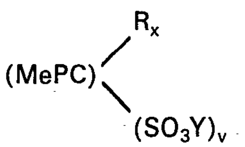

(1)

dans laquelle MePC représente le système cyclique phtalocyanine de zinc ou d'aluminium, Y est de l'hydrogène, un ion de métal alcalin, ammonium ou de sel d'amine, v est un nombre quelconque entre 0,1 et 4, R est le fluor, le chlore, le brome, l'iode ou un groupe cyano, et x un nombre quelconque entre 0,1 et 8, les symboles R existant dans la molécule pouvant être identiques ou différents, caractérisé par le fait qu'on sulfone une phtalocyanine de formule:

$$(MePC)-R_x$$

de préférence avec l'oléum et qu'on transforme éventuellement l'acide sulfonique obtenu en un sel.

29. Procédé pour préparer des composés de phtalocyanines de formule:

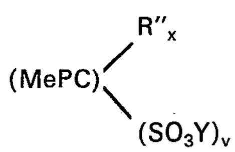

dans laquelle MePC représente le système cyclique phtalocyanine de zinc ou d'aluminium, Y est de l'hydrogène, un ion de métal alcalin, ammonium ou de sel d'amine, v est un nombre quelconque entre 0,1 et 4, R'' est le chlore, le brome ou l'iode, et x est un nombre quelconque entre 0,1 et 8, caractérisé par le fait qu'on chlore, qu'on brome ou qu'on iode une phtalocyanine sulfonée de formule:

$$(MePC)-(SO_3Y)_v$$

30. Procédé pour préparer les composés de phtalocyanines de formule:

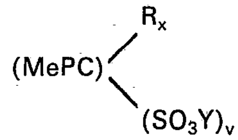

(1)

dans laquelle MePC représente le système cyclique phtalocyanine de zinc ou d'aluminium, Y est de l'hydrogène, un ion de métal alcalin, ammonium ou de sel d'amine, v est un nombre quelconque entre 0,1 et 4, R est le fluor, le chlore, le brome, l'iode ou un groupe cyano, et x est un nombre quelconque entre 0,1 et 8, les symboles R présents dans la molécule pouvant être identiques ou différents, caractérisé par le fait qu'on fait réagir une phtalocyanine de formule:

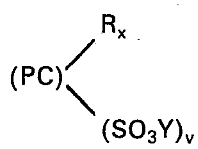

dans laquelle PC représente le système cyclique phtalocyanine non métallifère, et R, x, Y et v sont tels que définis ci-dessus, avec un sel ou un alcoolate de zinc ou d'aluminium.

**Claims** for the contracting States: BE, CH, DE, FR, IT, LI, LU, NL, SE

1. A process for bleaching textiles or removing stains from textiles and for combating micro-organisms in or on organic or inorganic substrates, or for protecting the latter against attack by micro-organisms, by treating the textiles, or the substrates to be freed of or protected from micro-organisms, with water-soluble zinc phthalocyanines or aluminium phthalocyanines, in the presence of water and underirradiation with light, which comprises using, as water-soluble zinc phthalocyanines or aluminium phthalocyanines, sulfonated zinc phthalocyanines or aluminium phthalocyanines which are further substituted by neutral water-insolubilising groups, for example by halogen atoms or pseudo-halogens, or mixtures of such phthalocyanines.

2. A process according to Claim 1 for bleaching textiles or removing stains from textiles, which comprises treating the latter, in the presence of water and under irradiation with light, with sulfonated zinc phthalocyanines or aluminium phthalocyanines which are further substituted by neutral water-insolubilising groups, for example by halogen atoms or pseudo-halogens, or with mixtures of such phthalocyanines compounds.

3. A process according to Claim 1 for combating micro-organisms in or on organic or inorganic substrates, or for protecting the latter against attack by micro-organisms, which comprises treating said substrates, in the presence of water and under irradiation with light, with sulfonated zinc phthalocyanines or aluminium phthalocyanines which are further substituted by neutral water-insolubilising groups, for example by halogen atoms or pseudo-halogens, or with mixtures of such phthalocyanine compounds.

4. A process according to one of Claims 1 to 3, which comprises using, as zinc phthalocyanines or aluminium phthalocyanines, those of the formula:

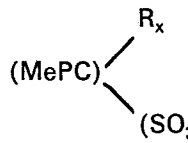

(1)

in which MePC is the zinc phthalocyanine or aluminium phthalocyanine ring system, Y is hydrogen, an alkali metal ion, an ammonium ion or an amine saltion, v is any value from 1 to 4, R is fluorine, chlorine, bromine, iodine or cyano, and x is any value from 0.1 to 8, and the substituents R present in the molecule may be identical or different.

5. A process according to Claim 4, which comprises using, as zinc phthalocyanines or aluminium phthalocyanines, those of the formula:

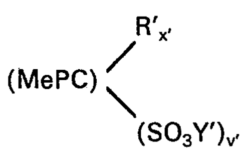

(2)

in which MePC is the zinc phthalocyanine or aluminium phthalocyanine ring system, Y' is hydrogen, an alkali metal ion or an ammonium ion, v' is any value from 1.3 to 4, preferably from 3 to 4, R' is chlorine, bromine or iodine, and x' is any value from 0.5 to 8, preferably from 0.8 to 4.

6. A process according to Claim 5, which comprises using a zinc phthalocyanine or aluminium phthalocyanine of the formula (2) in which Y' is hydrogen, sodium or potassium, v' is a value from 2 to 4, preferably from 3 to 4, R' is chlorine or bromine, preferably chlorine, and x' is any value from 0.8 to 2.

7. A process according to any one of Claims 4 to 6, which comprises using an aluminium phthalocyanine of the formula (1) or (2), wherein MePC is the aluminium phthalocyanine ring system, preferably one of the formula:

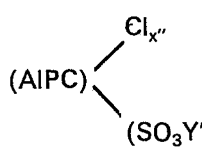

in which AlPC is the aluminium phthalocyanine ring system, x'' is any value from 0.8 to 1.5, v'' is any value from 3 to 4, and Y'' is hydrogen or sodium.

8. A process according to Claim 3, which comprises treating the substrates in or with an aqueous bath which contains one or more of the sulfonated zinc phthalocyanine or aluminium phthalocyanine compounds defined in Claims 3 to 7, or incorporating these compounds into the substrates, if the latter consist of water or contain water, and irradiating the substrates with an artificial light source, preferably an incandescent lamp or infra-red lamp, located either in the treatment bath or outside the latter, or carrying out the irradiation in the treatment bath or in the aqueous substrate, or in the moist state after removal from the bath.

9. A process according to Claim 8 for the disifection of laundry, which comprises washing the laundry, under irradiation with infra-red and/or visible light, in a wash liquor which contains, in addition to conventional detergent components, 0.001 to 100 ppm of one more phthalocyanine derivates defined in Claims 3 to 7 and, if appropriate, an inorganic salt.

10. A process according to Claim 8 for the disinfection or antimicrobial finishing of textiles, which comprises treating the latter in a liquor which contains 0.01 to 50 ppm of a zinc phthalocyanine or aluminium phthalocyanine derivative defined in Claims 3 to 7, the bath being irradiated directly with an artificial light source or the textiles being irradiated later, in the moist state, with an artificial light source or exposed to sunlight.

11. A process according to Claim 2, which comprises carrying out the treatment of the textiles in an aqueous bath which contains one or more sulfonated zinc phthalocyanines or aluminium phthalocyanines defined in Claims 2 or 4 to 7, in a concentration of 0.01 to 50 mg/l.

12. A process according to Claim 11, which comprises carrying out the irradiation with an artificial light source, preferably an incandescent lamp or infra-red lamp, either in the treatment bath or outside the latter, or carrying out the irradiation of the textiles when they have already been removed from the treatment bath and are still moist or have been moistened again, or carrying ou the irradiation of the soaked or washed textiles in sunlight.

13. A process according to one of Claims 2, 11 or 12 for washing and bleaching textiles, which comprises treating the latter in a liquor which also contains customary detergent components in addition to the sulfonated zinc phthalocyanine and/or aluminium phthalocyanine compound or compounds.

14. A process according to Claim 1 for the disinfection of surfaces, for example of baths, walls, furniture and the like, which comprises applying to said surfaces an aqueous solution which contains one or more phthalocyanine compounds defined in Claims 1 to 7 and then exposing the still moist surfaces to sunlight and, if appropriate, additionally irradiating them with an artificial light source producing infra-red and/or visible light.

15. A process according to Claim 1 for the disinfection of water in swimming baths and swimming pools, which comprises adding to the water 0.001 to 50 ppm, preferably 0.01 to 10 ppm, of one or more phthalocyanine derivatives defined in Claims 1 to 7, while also irradiating the water with an artificial light source in addition to the available sunlight.

16. A process according to Claim 1 for the disinfection of effluents from sewage purification plants, which comprises adding to the effluent 0.001 to 100 ppm, preferably 0.01 to 10 ppm, of one or more phthalocyanine derivatives defined in Claims 1 to 7, while also effecting irradiation with an artificial light source in addition to the available sunlight.

17. A microbicidal and/or bleaching composition which contains one or more sulfonated zinc phthalocyanine and/or aluminium phthalocyanine compounds defined in Claims 1 to 7.

18. A composition according to Claim 17, which contains one or more inorganic salts, for example NaCl or $Na_2SO_4$, and optionally water, in addition to one or more sulfonated zinc phthalocyanine and/or aluminium phthalocyanine compounds defined in Claims 3 to 7.

19. A composition according to Claim 18, which contains 50 to 80 % of one or more phthalocyanine compounds defined in Claims 4 to 7, preferably of a phthalocyanine compound defined in Claim 7, 10 to 30 % of NaCl and/or $Na_2SO_4$ and 0 to 30% of water.

20. A microbicidal compositon according to Claim 17, which contains one or more sulfonated zinc phthalocyanine and/or aluminium phthalocyanine compounds defined in Claims 3 to 7, and optionally conventional detergent components.

21. A bleaching, detergent or soaking composition according to Claim 17, which contains one or more sulfonated zinc phthalocyanine and/or aluminium phthalocyanine compounds defined in Claims 2 or 4 to 7.

22. A detergent compositon according to Claim 21, which contains one or more sulfonated zinc and/or aluminium phthalocyanine compounds as defined in Claims 2 to 4 or 7, preferably in an amount of 0.0005 to 1.5 % by weight, based on the total composition, one or more organic detergents, alkaline builder salts, and optionally further bleaching agents.

23. A detergent composition according to Claim 21, which contains 10 to 50 % of an anionic, non-ionic, semi-polar, ampholytic and/or zwitterionic surface-active substance, 0.005 to 1 % of a sulfonated phthalocyanine as defined in Claims 2 or 4 to 7, preferably in Claim 7, 0 to 80 % of an alkaline builder salt selected from the group consisting of water-soluble alkali metal carbonates, borates, phosphates, polyphosphates, bicarbonates and silicates, water-soluble aminopolycarboxylates, phytates, polyphosphonates and polycarboxylates, water-insoluble aluminium silicates, and optionally further conventional detergent components.

24. A detergent composition according to Claim 23, in which water-soluble alkylbenzenesulfonates, alkylsulfates, alkylpolyethoxyethersulfates, paraffinsulfonates, α-olefinsulfonates, α-sulfocarboxylic acids, their salts and esters, alkylglycerylethersulfonates, fatty acid monoglyceridesulfates or -sulfonates, alkylphenolpolyethoxyethersulfates, 2-acyloxyalkanesulfonates, β-alkoxyalkanesulfonates, soaps, polyethoxyfatty alcohols, alkylphenols, polypropoxyglycols, polypropoxyethylenediamines, amine oxides, phosphine oxides, sulfoxides, aliphatic secondary and tertiary amines, aliphatic quaternary ammonium, phosphonium and sulfonium compounds, or mixtures of the said substances, are used as surface-active substances.

25. A zinc phthalocyanine or aluminium phthalocyanine compound of the formula:

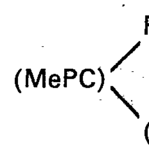 (1)

in which MePC is the zinc phthalocyanine or aluminium phthalocyanine ring system, Y is hydrogen, an alkali metal ion, an ammonium ion or amine salt ion, v is any value from 0.1 to 4, R is fluorine, chlorine, bromine, iodine or cyano, and x is any value from 0.1 to 8, and the substituents R present in the molecule may be identical or different.

26. A phthalocyanine compound according to Claim 25, of the formula:

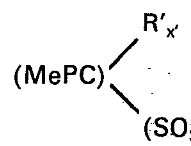 (2)

in which MePC is the zinc phthalocyanine or aluminium phthalocyanine ring system, preferably the aluminium phthalocyanine ring system, y' is hydrogen, an alkali metal ion or an ammonium ion, v' is any value from 1.3 to 4, preferably from 3 to 4, R' is chlorine, bromine or iodine, and x' is any value from 0.5 to 8, preferably from 0.8 to 4, preferably one wherein Y' is hydrogen, sodium or potassium, v' is a value from 2 to 4, preferably from 3 to 4, R' is chlorine or bromine, preferably chlorine, and x' is any value from 0.8 to 2.

27. A phthalocyanine compound according to either of Claims 25 or 26, of the formula (1) or (2), in which MePC is the aluminium phthalocyanine ring system, preferably one of the formula:

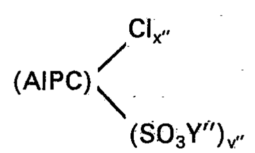

in which AlPC is the aluminium phthalocyanine ring system, x" is any value from 0.8 to 1.5, v" is any value from 3 to 4, and Y" is hydrogen or sodium.

28. A process for the preparation of a phthalocyanine compound of the formula:

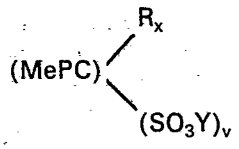 (1)

wherein MePC is the zinc phthalocyanine or aluminium phthalocyanine ring system, Y is hydrogen, an alkali metal ion, an ammonium ion or an amine salt ion, v is any value from 0.1 to 4, R is fluorine, chlorine, bromine, iodine or cyano, and x is any value from 0.1 to 8, and the substituents R present in the molecule may be identical or different, which comprises sulfonating a phthalocyanine of the formula:

$$(MePC)-R_x,$$

preferably with oleum, and, if appropriate, converting the sulfonic acid obtained into a salt.

29. A process according to Claim 28 for the preparation of a phthalocyanine compound of the formula (1), which comprises reacting a phthalocyanine of the formula:

$$(MePC)-R_x$$

with chlorosulfonic acid and hydrolysing the sulfochloride obtained.

30. A process for the preparation of a phthalocyanine compound of the formula:

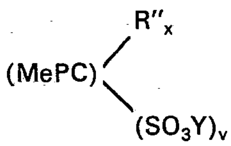

wherein MePC is the zinc phthalocyanine or aluminium phthalocyanine ring system, Y is hydrogen, an alkali metal ion, an ammonium ion or an amine salt ion, v is any value from 0.1 to 4, R″ is chlorine, bromine or iodine, and x is any value from 0.1 to 8, which comprises chlorinating, brominating or iodinating a sulfonated phthalocyanine of the formula:

$$(MePC)-(SO_3Y)_v$$

31. A process for the preparation of a phthalocyanine compound of the formula:

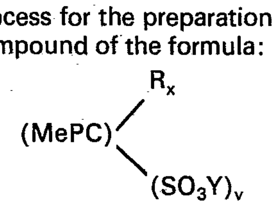 (1)

wherein MePC is the zinc phthalocyanine or aluminium phthalocyanine ring system, Y is hydrogen, an alkali metal ion, an ammonium ion or an amine salt ion, v is any value from 0.1 to 4, R is fluorine, chlorine, bromine, iodine or cyano, and x is any value from 0.1 to 8, while the substituents R present in the molecule may be identical or different, which comprises reacting a phthalocyanine of the formula:

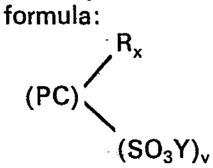

in which PC is the metal-free phthalocyanine ring system and R, x, Y and v are defined as above, with a zinc or aluminium salt or alcoholate.

32. A sulfonated zinc or aluminium phthalocyanine which is substituted in the phthalocyanine ring system by $R_x$ or $R''_x$, wherein x, R and R″ are as defined in one of Claims 28 to 31.

**Claims** for the contracting State: AT

1. A process for bleaching textiles or removing stains from textiles and for combatting micro-organisms in or on organic or inorganic substrates, or for protecting the latter against attack by micro-organisms, by treating the textiles, or the substrates to be freed of or protected from micro-organisms, with water-soluble zinc phthalocyanines or aluminium phthalocyanines, in the presence of water and under irradiation with light, which comprises using, as water-soluble zinc phthalocyanines or aluminium phthalocyanines, sulfonated zinc phthalocyanines or aluminium phthalocyanines which are further substituted by neutral water-insolubilising groups, for example by halogen atoms or pseudo-halogens, or mixtures of such phthalocyanines.

2. A process according to Claim 1 for bleaching textiles or removing stains from textiles, which comprises treating the latter, in the presence of water and under irradiation with light, with sulfonated zinc phthalocyanines or aluminium phthalocyanines which are further substituted by neutral water-insolubilising groups, for example by halogen atoms or pseudo-halogens, or with mixtures of such phthalocyanine compounds.

3. A process according to Claim 1 for combating micro-organisms in or on organic or inorganic substrates, or for protecting the latter against attack by micro-organisms, which comprises treating said substrates, in the presence of water and under irradiation with light, with sulfonated zinc phthalocyanines or aluminium phthalocyanines which are further substitutes by neutral water-insolubilising groups, for example by halogen atoms or pseudo-halogens, or with mixtures of such phthalocyanine compounds.

4. A process according to one of Claims 1 to 3, which comprises using, as zinc phthalocyanines or aluminium phthalocyanines, those of the formula:

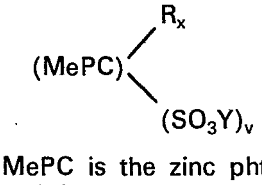 (1)

in which MePC is the zinc phthalocyanine or aluminium phthalocyanine ring system, Y is hydrogen, an alkali metal ion, an ammonium ion or an amine salt ion, v is any value from 1 to 4, R is fluorine, chlorine, bromine, iodine or cyano, and x is any value from 0.1 to 8, and the substituents R present in the molecule may be identical or different.

5. A process according to Claim 4, which

comprises using, as zinc phthalocyanines or aluminium phthalocyanines, those of the formula:

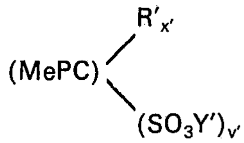
(2)

in which MePC is the zinc phthalocyanine or aluminium phthalocyanine ring system, Y' is hydrogen, an alkali metal ion or an ammonium ion, v' is any value from 1.3 to 4, preferably from 3 to 4, R' is chlorine, bromine or iodine, and x', is any value from 0.5 to 8, preferably from 0.8 to 4.

6. A process according to Claim 5, which comprises using a zonc phthalocyanine or aluminium phthalocyanine of the formula (2) in which Y' is hydrogen, sodium or potassium, v' is a value from 2 to 4, preferably from 3 to 4, R' is chlorine or bromine, preferably chlorine, and x' is any value from 0.8 to 2.

7. A process according to one of Claims 4 to 6, which comprises using an aluminium phthalocyanine of the formula (1) or (2), wherein MePC is the aluminium phthalocyanine ring system, preferably one of the formula:

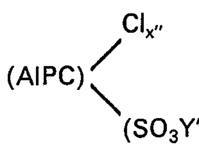

in which AlPC is the aluminium phthalocyanine ring system, x'' is any value from 0.8 to 1.5, v'' is any value from 3 to 4, and Y'' is hydrogen or sodium.

8. A process according to Claim 3, which comprises treating the substrates in or with an aqueous bath which contains one or more of the sulfonated zinc phthalocyanine or aluminium phthalocyanine compounds defined in Claims 3 to 7, or incorporating these compounds into the substrates, if the latter consist of water or contain water, and irradiating the substrates with an artificial light source, preferably an incandescent lamp or infra-red lamp, located either in the treatment bath or outside the latter, or carrying ou the irradiation of the substrates with sunlight, either directly in the treatement bath or in the aqueous substrate, or in the moist state after removal from the bath.

9. A process according to Claim 8 for the disinfection of laundry, which comprises washing the laundry, under irradiation with infra-red and/or visible light, in a wash liquor which contains, in addition to conventional detergent components, 0.001 to 100 ppm of one or more phthalocyanine derivates defined in Claims 3 to 7 and, if apropriate, an inorganic salt.

10. A process according to Claim 8 for the disinfection or antimicrobial finishing of textiles, which comprises treating the latter in a liquor which contains 0.01 to 50 ppm of a zinc phthalocyanine or aluminium phthalocyanine derivative defined in Claims 3 to 7, the bath being irradiated directly with an artificial light source or the textiles being irradiated later, in the moist state, with an artificial light source or exposed to sunlight.

11. A process according to Claim 2, which comprises carrying out the treatment of the textiles in a aqueous bath which contains one or more sulfonated zinc phthalocyanines or aluminium phthalocyanines defined in Claims 2 or 4 to 7, in a concentration of 0.01 to 50 mg/l.

12. A process according to Claim 11, which comprises carrying out the irradiation with an artificial light source, preferably an incandescent lamp or infra-red lamp, either in the treatment bath or outside the latter, or carrying out the irradiation of the textiles when they have already been removed from the treatment bath and are still moist or have been moistened again, or carrying out the irradiation of the soaked or washed textiles in sunlight.

13. A process according to one of Claims 2, 11 or 12 for washing and bleaching textiles, which comprises treating the latter in a liquor which also contains customary detergent components in addition to the sulfonated zinc phthalocyanine and/or aluminium phthalocyanine compound or compounds.

14. A process according to Claim 1 for the disinfection of surfaces, for example of baths, walls, furniture and the like, which comprises applying to said surfaces a aqueous solution which contains one or more phthalocyanine compounds defined in Claims 1 to 7 and then exposing the still moist surfaces to sunlight and if appropriate, additionally irradiating them with an artificial light source producing infra-red and/or visible light.

15. A process according to Claim 1 for the disinfection of water in swimming baths and swimming pools, which comprises adding to the water 0.001 to 50 ppm, preferably 0.01 to 10 ppm, of one or more phthalocyanine derivatives defined in Claims 1 to 7, while also irradiating the water with an artificial light source in addition to the available sunlight.

16. A process according to Claim 1 for the disinfection of effluents from sewage purification plants, which comprises adding to the effluent 0.001 to 100 ppm, preferably 0.01 to 10 ppm, of one or more phthalocyanine derivates defined in Claims 1 to 7, while also effecting irradiation with an artificial light source in addition to the available sunlight.

17. A microbicidal and/or bleaching composition which contains one or more sulfonated zinc phthalocyanine and/or aluminium phthalocyanine compounds defined in Claims 1 to 7.

18. A composition according to Claim 17, which contains one or more inorganic salts, for example NaCl or $Na_2SO_4$, and optionally water, in addition to one or more sulfonated zinc phthalocyanine and/or aluminium phthalocyanine compounds defined in Claims 3 to 7.

19. A composition according to Claim 18, which contains 50 to 80 % of one or more phthalocyanine

compounds defined in Claims 4 to 7, preferably of a phthalocyanine compound defined in Claim 7, 10 to 30 % of NaCl and/or $Na_2SO_4$ and 0 to 30 % of water.

20. A microbicidal composition according to Claim 17, which contains one or more sulfonated zinc phthalocyanine and/or aluminium phthalocyanine compounds defined in Claims 3 to 7, and optionally conventional detergent components.

21. A bleaching, detergent or soaking compositon according to Claim 17, which contains one or more sulfonated zinc phthalocyanine and/or aluminium phthalocyanine compounds defined in Claims 2 or 4 to 7.

22. A detergent compositon according to Claim 21, which contains one or more sulfonated zinc and/or aluminium phthalocyanine compounds as defined in Claims 2 to 4 or 7, preferably in an amount of 0.0005 to 1.5 % by weight, based on the total composition, one or more organic detergents, alkaline builder salts, and optionally further bleaching agents.

23. A detergent composition according to Claim 21, which contains 10 to 50 % of an anionic, non-ionic, semi-polar, ampholytic and/or zwitterionic surface-active substance, 0.005 to 1 % of a sulfonated phthalocyanine as defined in Claims 2 or 4 to 7, preferably in Claim 7, 80 to 90 % of an alkaline builder salt selected from the group consisting of water-soluble alkali metal carbonates, borates, phosphates, polyphosphates, bicarbonates and silicates, water-soluble aminopolycarboxylates, phytates, polyphosphonates and polycarboxylates, water-insoluble aluminium silicates, and optionally further conventional detergent components.

24. A detergent composition according to Claim 23, in which water-soluble alkylbenzenesulfonates, alkylsulfates, alkylpolyethoxyethersulfates, paraffinsulfonates, α-olefinsulfonates, α-sulfocarboxylic acids, their salts and esters, alkylglycerylethersulfonates, fatty acid monoglyceridesulfates or sulfonates, alkylphenolpolyethoxyethersulfates, 2-acyloxyalkanesulfonates, β-alkoxyalkanesulfonates, soaps, polyethoxyfatty alcohols, alkylphenols, polypropoxyglycols, polypropoxyethylenediamines amine oxides, phosphine oxides, sulfoxides, aliphatic secondary and tertiary amines, aliphatic quaternary ammonium, phosphonium and sulfonium compounds, or mixtures of the said substances, are used as surface-active substances.

25. A process for the preparation of a zinc or aluminium phthalocyanine compound of the formula:

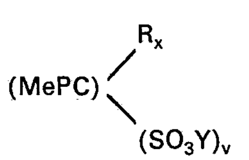 (1)

in which MePC is the zinc phthalocyanine or aluminium phthalocyanine ring system, Y is hydrogen, an alkali metal ion, an ammonium ion or amine salt ion, v is any value from 0.1 to 4, R is fluorine, chlorine, bromine, iodine or cyano, and x is any value from 0.1 to 8, and the substituents R present in the molecule may be identical or different, which process comprises reacting a phthalocyanine of the formula $(MePC)-R_x$ with chlorosulfonic acid and hydrolysing the sulfochloride so obtained.

26. A process according to Claim 25 for the preparation of a phthalocyanine compound of the formula:

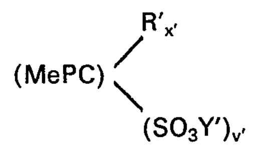 (2)

in which MePC is the zinc phthalocyanine or aluminium phthalocyanine ring system, preferably the aluminium phthalocyanine ring system, Y' is hydrogen, an alkali metal ion or an ammonium ion, v' is any value from 1.3 to 4, preferably from 3 to 4, R' is chlorine, bromine or iodine, and x' is any value from 0.5 to 8, preferably from 0.8 to 4, preferably one wherein Y' is hydrogen, sodium or potassium, v' is a value from 2 to 4, preferably from 3 to 4, R' is chlorine or bromine, preferably chlorine, and x' is any value from 0.8 to 2, which process comprises reacting a phthalocyanine of the formula $(MePC)-R'_{x'}$ with chlorosulfonic acid and hydrolysing the sulfochloride so obtained.

27. A process according to either of Claims 25 or 26 for the preparation of a phthalocyanine compound of the formula (1) or (2), wherein MePC is the aluminium phthalocyanine ring system, preferably one of the formula:

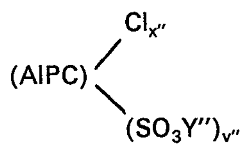

in which AlPC is the aluminium phthalocyanine ring system, x'' is any value from 0.8 to 1.5, v'' is any value from 3 to 4, and Y'' is hydrogen or sodium, which process comprises reacting a compound of the formula:

$(AlPC)-R_x$, $(AlPC)-R'_{x'}$ or $(AlPC)-Cl_{x''}$

with chlorosulfonic acid and hydrolysing the sulfochloride so obtained.

28. A process for the preparation of a phthalocyanine compound of the formula:

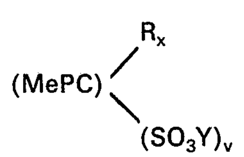 (1)

wherein MePC is the zinc phthalocyanine or aluminium phthalocyanine ring system, Y is hydrogen, an alkali metal ion, an ammonium ion or an amoin salt ion, v is any value from 0.1 to 4, R is fluorine, chlorine, bromine, iodine or cyano, and x is any value from 0.1 to 8, and the substituents R present in the molecule may be identical or different, which comprises sulfonating a phthalocyanine of the formula:

$$(MePC)-R_{x'}$$

preferably with oleum, and if appropriate, converting the sulfonic acid obtained into a salt.

29. A process for the preparation of a phthalocyanine compound of the formula:

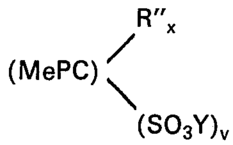

wherein MePC is the zinc phthalocyanine or aluminium phthalocyanine ring system, Y is hydrogen, an alkali metal ion, an ammonium ion or an amine salt ion, v is any value from 0.1 to 4, R″ is chlorine, bromine or iodine, and x is any value from 0.1 to 8, which comprises chlorinating, brominating or iodinating a sulfonated phthalocyanine of the formula:

$$(MePC)-(SO_3Y)_v$$

30. A process for the preparation of a phthalocyanine compound of the formula:

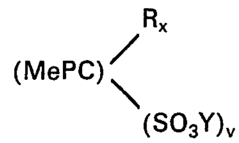

(1)

wherein MePC is the zinc phthalocyanine or aluminium phthalocyanine ring system, Y is hydrogen, an alkali metal ion, an ammonium ion or an amine salt ion, v is any value from 0.1 to 4, R is fluorine, chlorine, bromine, iodine or cyano, and x is any value from 0.1 to 8, while the substituents R present in the molecule may be identical or different, which comprises reacting a phthalocyanine of the formula:

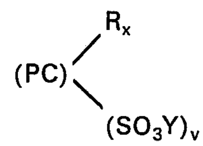

in which PC is the metal-free phthalocyanine ring system and R, x, Y and v are defined as above, with a zinc or aluminium salt or alcoholate.